# NEW EUROPEAN PATENT SPECIFICATION

(11) **EP 1 040 158 B2**
(45) Date of publication and mention of the opposition decision: **18.04.2012**
(45) Mention of the grant of the patent: 02.03.2005
(21) Application number: 98964150.1
(22) Date of filing: 18.12.1998
(51) Int. Cl.: C08J 9/00, B65D 1/02

(54) **MICROCELLULAR FOAM EXTRUSION/BLOW MOLDING PROCESS AND ARTICLE MADE THEREBY**
MIKROZELLULARES SCHAUMSTOFF-EXTRUSIONS/BLASFORMVERFAHREN UND DAMIT HERGESTELLTER GEGENSTAND
PROCEDE DE MOULAGE PAR EXTRUSION/SOUFFLAGE DE MATERIAUX MICRO-CELLULAIRES ET ARTICLE OBTENU

(30) Priority: 19.12.1997 US 68173 P; 10.11.1998 US 107754 P
(43) Date of publication of application: 04.10.2000
(73) Proprietor: Trexel, Inc., Woburn, MA 01801 (US)
(72) Inventor: ANDERSON, Jere, R., Newburyport, MA 01950 (US); STRAFF, Richard, S., Marblehead, MA 01945 (US); OKAMOTO, Kelvin, Boston, MA 02111 (US); BLIZARD, Kent, Ashland, MA 02116 (US); PIERICK, David, Georgetown, MA 01833 (US)
(74) Representative: HOFFMANN EITLE
(86) International application number: PCT/US1998/027118
(87) International publication number: WO 1999/032544

(56) References cited:
- EP-A2- 0 158 212
- EP-A2- 0 211 250
- WO-A1-97/16476
- WO-A1-97/28050
- DE-A1- 19 525 198
- DE-A1- 19 701 224
- GB-A- 1 456 171
- JP-A- 2 113 035
- JP-A- 6 312 449
- JP-A- 05 222 235
- US-A- 3 225 127
- US-A- 3 721 360
- US-A- 4 473 665
- US-A- 4 627 177
- US-A- 4 627 177
- US-A- 4 728 559
- US-A- 4 874 649
- US-A- 5 468 530
- MODERN PLASTICS vol. 75, March 1998, pages 30 - 31
- CELLULAR AND MICROCELLULAR MATERIALS vol. 53, 1994, pages 109 - 124
- CELLULAR AND MICROCELLULAR MATERIALS vol. 53, 1994, pages 125,127 - 139
- CELLULAR AND MICROCELLULAR MATERIALS vol. 76, 1996, page 1,2,27
- CELLULAR AND MICROCELLULAR MATERIALS 1996, page 33-36
- GÄCHTER MÜLLER PLASTIC ADDITIVES 1993, pages 830 - 831
- STEVENSON J.F.: 'Innovation in Polymer Processing', 1996, CARL HANSER page CHAPT.3
- PETER W. ATKINS: 'Physikalische Chemie', 1987 pages 158 - 159
- 'Kunststoff-Taschenbuch', part 3.8.2 1967, CARL HANSER VERLAG article 'Hohlkörper Blasen'

## Description

### Background of the Invention

Polymeric foams include a plurality of voids, also called cells, in a polymer matrix. By replacing solid plastic with voids, polymeric foams use less raw material than solid plastics for a given volume. Thus, by using polymeric foams in many applications instead of solid plastics, material costs are reduced.

Microcellular foams have smaller cell sizes and higher cell densities than conventional polymeric foams. Microcellular foams are here defined as having average cell sizes of less than 100µm (otherwise in this specification called "micron") and a cell density of greater than 10⁶ cells/cm³ of solid plastic. In a typical continuous process for forming microcellular foam (e.g. extrusion), the pressure on a single-phase solution of blowing agent and polymer is rapidly dropped to nucleate the cells. The nucleation rate must be high enough to form the microcellular structure.

Several patents describe aspects of microcellular materials and microcellular processes.

U.S. Patent No. 4,473,665 (Martini-Vvedensky, et al.; September 25, 1984) describes a process for making foamed polymer having cells less than about 100 microns in diameter. In the technique of Martini-Vvedensky, et al., a material precursor is saturated with a blowing agent, the material is placed under high pressure, and the pressure is rapidly dropped to nucleate the blowing agent and to allow the formation of cells. The material then is frozen rapidly to maintain a desired distribution of microcells.

U.S. Patent No. 5,158,986 (Cha, et al.; October 27, 1992) describes formation of microcellular polymeric material using a supercritical fluid as a blowing agent. In a batch process of Cha, et al., a plastic article is submerged at pressure in supercritical fluid for a period of time, and then quickly returned to ambient conditions creating a solubility change and nucleation. In a continuous process, a polymeric sheet is extruded, and then can be run through rollers in a container of supercritical fluid at high pressure, and then exposed quickly to ambient conditions. In another continuous process, a supercritical fluid-saturated molten polymeric stream is established. The polymeric stream is rapidly heated, and the resulting thermodynamic instability (solubility change) creates sites of nucleation, while the system is maintained under pressure preventing significant growth of cells. The material then is injected into a mold cavity where pressure is reduced and cells are allowed to grow.

International patent publication no. WO 98/08667 (Burnham et al.) provides methods and systems for producing microcellular material, and microcellular articles. In one method of Burnham et al., a fluid, single phase solution of a precursor of foamed polymeric material and a blowing agent is continuously nucleated by dividing the stream into separate portions and separately nucleating each of the separate portions. The divided streams can be recombined into a single stream of nucleated, fluid polymeric material. The recombined stream may be shaped into a desired form, for example, by a shaping die. Burnham et al. also describe a die for making advantageously thick microcellular articles, that includes a multiple pathway nucleation section. Other methods describe the fabrication of very thin microcellular products, as well. In particular, a method for continuously extruding microcellular material onto a wire, resulting in very thin essentially closed cell microcellular insulating coating secured to the wire, is provided. In some of the methods, pressure drop rate is an important feature and techniques to control this and other parameters are described.

Polymeric extrusion blow molding is a known process in which a molten polymeric material is extruded from an extruder die as a parison (an essentially cylindrical polymeric sleeve). The parison is placed in a mold and, typically while still warm enough to be soft and moldable, is subjected to significant gas pressure internal of the cylinder and expanded against the mold. Many common articles such as beverage bottles, motor oil bottles, pharmaceutical packaging and cosmetic packaging are manufactured using this technique.

In many cases, a parison is extruded so as to have differing thickness along its length. Thicker portions may correspond to locations where the article needs to be reinforced to a relatively greater extent, or to provide for expansion in some regions to a greater extent than in other regions (in the blow-molding formation of, for example, a plastic detergent bottle), while maintaining an essentially constant thickness in the molded article.

U.S. Patent No. 4,444,702 (Thomas, et al.) describes a system for producing tubular extruded parisons of thermoplastic material, the wall thickness of the extruded parison being varied during extrusion.

U.S. Patent No. 3,939,236 (Hahn) describes a technique involving extruding a cellular polymeric tubular parison, then blow molding the parison.

U.S. Patent No. 3,225,127 (Scott) describes a process involving extruding molten plastic containing a foaming agent through an annular orifice to form a foamed parison, then placing the parison in a blow mold cavity and expanding the parison within the mold.

U.S. Patent No. 4,874,649 (Daubenbilchel, et al.) states that major difficulties exist in extrusion blow molding of foam articles in which a preform that has already been foamed is expanded. Daubenbuchel, et al. state that foamed material of a preform that is still in a thermoplastic condition has regions that exhibit different strength and expandability values over the length and periphery of the preform, with the result that weak points are formed under the effect of internal pressure within the preform, and that in many circumstances these weak points cause the wall of the preform or the molded article produced therefrom to tear open, giving rise to wastage. Daubenbüchel, et al. purportedly solve this problem by coextruding a multi-layer thermoplastic preform in which at least one layer is non-foamable. Using a non-foamable layer purportedly allows the preform to be expanded, after the material has been foamed, without giving rise to the danger of forming weak points or holes through the wall of the article. When the layer of non-foamable material is arranged on the outside of the article, an article is produced having a smooth exterior surface. Daubenbüchel, et al. also describe blow-molding expansion of the preforms at a pressure on the order of 1 bar, or less than around 0.5 bar, which they characterize as markedly lower than in the case of conventional extrusion blowing process, to avoid bubbles or pores in the foamed material from being compressed.

Conventional foam processes, in some cases, incorporate nucleating agents, some of which are inorganic solid particles, into the polymer melt during processing. Such agents can be of a variety of compositions, such as talc and calcium carbonate. In particular, nucleating agents are incorporated into the polymer melt typically at levels less than 1% by weight of polymeric melt to lower the energy for cell nucleation. The dispersion of nucleating agents within the polymer mixture is often times critical in forming a uniform cell structure. In some cases, higher levels are not used because of the agglomeration of the particles which can lead to non-uniform cell structures having anomalous large cells. The following U.S. Patents describe the use of nucleating agents in foam processes.

U.S. Patent No. 3,491,032 (Skochdopole et al.; January 20, 1970) describes a process for making cellular polymer materials. In a process of Skochdopole, finally divided solid materials such as calcium silicate, zinc stearate, magnesium stearate and the like can advantageously be incorporated with the polymer or gel prior to expanding the same. Such finely divided materials aid in controlling the size of the cells, and are employed in amounts of from about 0.01% to about 2.0% by weight of the polymer.

U.S. Patent No. 5,116,881 (Park et al.; May 26, 1992) describes polypropylene foam sheets and a process for their manufacture. In a process of Park, a nucleating agent is used to create sites for bubble initiation. It is preferred that the nucleating agent have a particle size in the range of 0.3 to 5.0 microns and that its concentration be less than one part per hundred parts polymer by weight. Concentrations of nucleating agents greater than five parts per hundred parts polymer by weight leads to agglomeration, or insufficient dispersion of nucleating substance so that the diameter of the cell size becomes greater.

Filters in polymeric foams are typically added in amounts of at least 20% by weight polymeric material, and in many cases greater than 30% by weight. In international patent publication no. WO 98/08667 described above, Burnham describes examples of microcellular material that include filler levels in an amount of at least 10% by weight polymeric material, other examples include filler levels in an amount of at least about 25% by weight polymeric material, other examples include filler levels in an amount of at least about 35% by weight polymeric material, and still other examples include filler levels of at least about 50% by weight polymeric material.

High-density polyethylene (HDPE) has traditionally been a difficult material to process as a foam. This, in part, arises from the low melt strength of HDPE. Processes that employ chemical blowing agents have been developed to produce foams from high-density polyethylene. Additionally, HDPE foams have been produced by batch processes (see, for example, U.S. Patent No. 5,158,986. However, the applicants are unaware of extruded or foam-molded foams from HDPE produced without the use of chemical blowing agents or without the addition of greater than 20% additive like low density polyethylene (LDPE) or linear low density polyethylene (LLDPE).

In addition, in general, extrusion of microcellular material can be technically complicated because a balance of pressure drop rate, temperature, blowing agent content, and die shape and design can affect properties and appearance of an extruded microcellular article.

While processes for the extrusion blow molding of foamed polymeric material are known, a need exists for simplified processes for production of extruded blow-molded products having good physical qualities. Additionally, though nucleating agents have been used in low weight percentages in the production of foams and fillers have been used in high weight percentages in the production of conventional foams and microcellular foams, foam processes typically have not employed a midlevel amount of nucleating agent. It is an object of the invention, therefore, to provide a method for making extrusion blow-molded foam articles of good physical properties. It is another object to provide a method for making a relatively thin-walled extruded, blow-molded foam articles that involves controlling foam uniformity and density. It is yet another object of the invention to provide non-batch-process HDPE foams of high quality.

### Summary of the Invention

The present invention provides a method associated with polymeric foam, blow-molded articles, foams including nucleating agents, and non-batch HDPE foams.

The invention provides a method as defined in claim 1, below. There is provided a blow molding method defined in claim 1. The disclosure below includes disclosure of systems. One system may include extrusion apparatus having an extruder with an inlet designed to receive a precursor of polymeric microcellular material, constructed and arranged to provide a single-phase, non-nucleated solution of polymeric material and a blowing agent. A blow-molding forming die is fluidly connected to the extruder and has an outlet designed to release a parison of microcellular material. The apparatus includes an enclosed passageway connecting the extruder inlet to a blow molding forming die outlet. The passageway includes a nucleating pathway having length and cross-sectional dimensions selected to create, in a single-phase, non-nucleated solution of blowing agent and fluid polymeric material, a pressure drop at a rate sufficient to cause microcellular nucleation. A blow mold also is included, and is positionable to receive a parison of microcellular material from the die outlet.

A system is disclosed that includes an extruder constructed and arranged to provide a polymeric foam precursor material, and an accumulator associated with the extruder. The accumulator is able to receive polymeric foam precursor material from the extruder and to accumulate a charge of polymeric foam precursor material. Blow molding apparatus also is provided in this system, and is positionable to receive a product of the accumulator, via a forming die. The blow molding apparatus is constructed and arranged to blow mold the material to form a blow-molded foam polymeric article.

A system is disclosed that includes a combination of some aspects described above is provided. The system may include an extruder having an inlet to receive a precursor of polymeric microcellular material that is constructed and arranged to provide a single-phase non-nucleated solution of polymeric material and a blowing agent. An accumulator is provided and is positionable to receive polymeric foam precursor material from the extruder and to accumulate a charge of the polymeric foam precursor material. A blow-molding forming die is fluidly connected to the accumulator and has an outlet designed to release a parison of microcellular material. A blow mold is positionable to receive a parison of microcellular material from the die outlet and is constructed and arranged to form a blow-molded, foam, microcellular, polymeric article. The apparatus includes an enclosed passageway connecting the extruder inlet with the die outlet, the passageway including a nucleating pathway defined above.

A forming die device is disclosed. The die includes an inlet at an upstream end constructed and arranged to receive a single-phase, homogeneous solution of polymeric material and a blowing agent that is a gas under ambient conditions, and an outlet at a downstream end thereof, defining a die gap, for releasing foamed polymeric material. A fluid pathway connects the inlet with the outlet and includes a nucleating pathway. The die is constructed and arranged to vary the width of the die gap during extrusion while maintaining a constant nucleating pathway gap.

There is disclosed below a series of methods. A method is disclosed that involves extruding polymeric foam extrudate from an extruder die while varying the thickness of the extrudate.

Another method is disclosed that includes providing an extrudate polymeric microcellular foam parison and subjecting the parison to blow molding conditions.

Another method is disclosed that involves extruding a polymeric foam extrudate from an extruder die in a machine direction while varying the temperature of the extrudate exiting the die. An extrudate thereby is formed having a first portion and a second portion spaced from the first portion in the machine direction, the first portion and second portion differing in material density by a factor of at least 1.1.

Another method is disclosed that involves subjecting a foam polymeric parison to relatively severe blow-molding conditions while maintaining relatively constant density in the parison. A parison can be subjected to blow-molding conditions of at least about 1 bar (15 psi) thereby expanding at least a portion of the parison at least about 50% in circumference. This takes place while the density of the parison remains relatively constant, in particular the density is increased by no more than about 20%.

Also disclosed is a process for producing a foam, and a microcellular foam, that includes a mid-level amount of nucleating agent. The microcellular foams can be produced in typical polymer processing techniques such as extrusion, injection molding and blow molding. The foams exhibit excellent mechanical properties and can be formed over a broad range of density into a number of different foam articles.

A method is disclosed of forming a microcellular article. The method includes conveying polymeric material in a downstream direction in a polymer processing apparatus. The polymeric material includes a semicrystalline polymer, and a nucleating agent in an amount between about 2.5 and about 7 weight percent by weight of the polymeric material. The method further includes forming a microcellular article from the polymeric material.

The process disclosed further includes the step of introducing blowing agent into the polymeric material in the polymer processing apparatus in an amount less than 1.5 weight percent by weight of the polymeric material, to form a solution of blowing agent and polymeric material. In certain embodiments, the process further includes the step of inducing a pressure drop rate of less than 1.0 GPa/s in the solution of blowing agent and polymeric material.

Disclosure is provided of a microcellular polymeric article including a matrix of polymeric material including a plurality of cells having an average cell size of less than about 60 microns. The polymeric material includes a semicrystalline polymer and a nucleating agent in an amount between about 2.5 and about 7 weight percent, by weight of the polymeric material.

Among other advantages, certain embodiments of the invention provide a viable process for producing the microcellular foam articles with low blowing agent percentages and/or low pressure drop rates due to the presence of the nucleating agent. Using low blowing agent percentages results in cost savings associated with the blowing agent and also may improve the surface quality of resulting microcellular articles. Employing low pressure drop rates as opposed to high pressure drop rates generally permits greater freedom in die design and, in some cases, allows for the production of foam articles at thicker cross-sectional dimensions.

Different embodiments of the invention also provide processes for the production of a variety of different types of foam articles, for example, extruded articles, blow molded articles, and injection molded articles, from a variety of different semi-crystalline polymeric materials.

Furthermore, the invention provides a microcellular foam that includes nucleating agents at high enough levels, between 2.5% and 7% by weight polymeric material, to effectively function as filler that replaces solid plastic in a non-negligible amount. Replacing solid plastic with these agents can result in material cost savings and mechanical property enhancement.

In addition, in many cases the mieroceilular foams have uniform and fine cell structures despite the presence of the inorganic particles. The interconnectivity between cells is minimal, in many embodiments. Also, the foams can be produced over a range of densities. In particular, relatively high density foams can be produced having properties comparable to the solid, unfoamed plastic.

The present invention can provide a foam article that includes a matrix of polymeric material including a plurality of cells and which consists essentially of high-density polyethylene and is essentially free of residual chemical blowing agent and reaction-by-products of chemical blowing agent. The article has a shape essentially identical to that of a continuous extrudate or the interior of a mold.

The invention can provide a method of forming a foam article which method includes the step of conveying polymeric material in a downstream direction in a polymer processing apparatus. The polymeric material consists essentially of high-density polyethylene. The method further includes the steps of introducing a physical blowing agent into the polymeric material in the polymer processing apparatus and forming a foam article from the polymeric material.

The invention also provides a method of producing HDPE foams with a physical blowing agent. In many foam processes, it is advantageous to use physical blowing agents instead of chemical blowing agents. For instance, physical blowing agents are often less expensive than chemical blowing agents. In addition, physical blowing agents do not introduce reactive materials into the article that may interfere with effective recycling of the articles. Finally, processes using physical blowing agents are more efficient and reliable, not having to depend on a chemical reaction to determine the amount of blowing agent released during the foaming process.

Furthermore, the invention provides an HDPE foam containing low amounts of, or essentially free of residual chemical blowing agent and reaction-by-products of chemical blowing agents. In some cases, the presence of residual chemical blowing agents and reaction-by-products of chemical blowing agents in a material is detrimental and can restrict its use. The HDPE foams, in accordance to the invention, are advantageously suitable for applications, such as food packaging, and are more easily recycled without adverse effects.

The invention can provide specific die designs useful for making high quality, microcellular, polymeric extrudate. The die can be provided as part of a system of extrusion. The die includes a nucleating pathway that decreases in cross-section in a downstream direction with an included angle of greater than 4°.

Such a forming die can include a nucleating pathway constructed such that when a single-phase, non-nucleated solution of polymeric material and blowing agent is introduced into the die and conveyed through the die at a flow rate of about 45.4 kg (100 pounds) per hour, nucleation of the solution occurs to form a nucleated polymeric stream that is released from the die in a period of time of no more than about 0.002 second after nucleation.

The invention provides a method that involves introducing a single-phase, non-nucleated solution of polymeric material and blowing agent into a polymer forming die. Within the die the solution is nucleated to form a nucleated polymeric stream. The stream is released as a polymeric microcellular extrudate from an outlet of the die in a period of time of no more than about 0.002 second after nucleation.

Other advantages, novel features, and objects of the invention will become apparent from the following detailed description of the invention when considered in conjunction with the accompanying drawings, which are schematic and which are not intended to be drawn to scale. In the figures, each identical or nearly identical component that is illustrated in various figures is represented by a single numeral. For purposes of clarity, not every component is labeled in every figure, nor is every component of each embodiment of the invention shown where illustration is not necessary to allow those of ordinary skill in the art to understand the invention.

### Brief Description of the Drawings

Fig. 1 is a schematic illustration of an injection blow molding system;
Fig. 2 is a schematic illustration of a die for the injection blow molding system of Fig. 1;
Fig. 3 is a schematic illustration of the die of Fig. 2, adjusted to extrude relatively thicker microcellular material;
Fig. 4 is a schematic illustration of another embodiment of the die of Fig. 2;
Fig. 5 illustrates a multihole blowing agent feed orifice arrangement and extrusion screw;
Fig. 6 illustrates an alternative embodiment of an extrusion system for producing microcellular foam;
Fig. 7 is a photocopy of an SEM micrograph of a cross-section of the material produced in Example 4;
Fig. 8 is a photocopy of an SEM micrograph of a cross-section of the material produced in Example 5;
Fig. 9 is a photocopy of an SEM micrograph of a cross-section of the material produced in Example 6;
Fig. 10 is a photocopy of an SEM micrograph of a cross-section of the material produced in Example 7;
Fig. 11 is a photocopy of an SEM micrograph of a cross-section of the material produced in Example 8;
Fig. 12 is a photocopy of an SEM micrograph of a cross-section of the material produced in Example 9; and
Fig. 13 is a photocopy of an SEM micrograph of a cross-section of the material produced in Example 10.

### Detailed Description of the Invention

Commonly owned, co-pending international patent publication no. WO 98/08667 published March 5, 1998, commonly owned, co-pending international patent publication no.WO 98/31521 published July 23, 1998, commonly owned, co-pending U.S. provisional patent application serial no. 60/068,173 entitled "Microcellular Extrusion/Blow Molding Process and Article Made Thereby", filed December 19, 1997, commonly owned, co-pending U.S. provisional patent application serial no. 60/107,754 entitled "Microcellular Extrusion/Blow Molding Process and Article Made Thereby", filed November 10, 1998, contain related disclosure.

The various embodiments and aspects of the invention will be better understood from the following definitions. As used herein, "nucleation" defines a process by which a homogeneous, single-phase solution of polymeric material, in which is dissolved molecules of a species that is a gas under ambient conditions, undergoes formations of clusters of molecules of the species that define "nucleation sites", from which cells will grow. That is, "nucleation" means a change from a homogeneous, single-phase solution to a mixture in which sites of aggregation of at least several molecules of blowing agent are formed. Nucleation defines that transitory state when gas, in solution in a polymer melt, comes out of solution to form a suspension of bubbles within the polymer melt. Generally this transition state is forced to occur by changing the solubility of the polymer melt from a state of sufficient solubility to contain a certain quantity of gas in solution to a state of insufficient solubility to contain that same quantity of gas in solution. Nucleation can be effected by subjecting the homogeneous, single-phase solution to rapid thermodynamic instability, such as rapid temperature change, rapid pressure drop, or both. Rapid pressure drop can be created using a nucleating pathway, defined below. Rapid temperature change can be created, for example, by using a heated portion of an extruder or by using a hot glycerine bath.

A "nucleating agent" is a dispersed agent, such as talc or other filler particles, added to a polymer and able to promote formation of nucleation sites from a single-phase, homogeneous solution. Thus "nucleation sites" do not define locations, within a polymer, at which nucleating agent particles reside. A "filler" is a dispersed particle added to replace solid plastic.

"Nucleated" refers to a state of a fluid polymeric material that had contained a single-phase, homogeneous solution including a dissolved species that is a gas under ambient conditions, following an event (typically thermodynamic instability) leading to the formation of nucleation sites. "Non-nucleated" refers to a state defined by a homogeneous, single-phase solution of polymeric material and dissolved species that is a gas under ambient conditions, absent nucleation sites. A "non-nucleated" material can include nucleating agent such as talc.

A "polymeric material/blowing agent mixture" can be a single-phase, non-nucleated solution of at least the two, a nucleated solution of at least the two, or a mixture in which blowing agent cells have grown.

"Essentially closed-cell" microcellular material is meant to define material that, at a thickness of about 200 microns, contains no connected cell pathway through the material.

"Nucleating pathway" is meant to define a pathway that forms part of microcellular polymeric foam extrusion apparatus and in which, under conditions in which the apparatus is designed to operate (typically at pressures of from about 100 to about 2000 bar - about 1500 to about 30,000 psi -upstream of the nucleator and at flow rates of greater than about 4.54 kg (10 pounds) polymeric material per hour), the pressure of a single-phase solution of polymeric material admixed with blowing agent in the system drops below the saturation pressure for the particular blowing agent concentration at a rate or rates facilitating rapid nucleation. A nucleating pathway defines, optionally with other nucleating pathways, a nucleation or nucleating region of a device of the invention.

"Reinforcing agent", as used herein, refers to auxiliary, essentially solid material constructed and arranged to add dimensional stability, or strength or toughness, to material Such agents are typified by fibrous material as described in U.S. Patent Nos. 4,643,940 and 4,426,470. "Reinforcing agent" does not, by definition, necessarily include filler or other additives that are not constructed and arranged to add dimensional stability. Those of ordinary skill in the art can test an additive to determine whether it is a reinforcing agent in connection with a particular material.

In preferred embodiments, microcellular material of the invention is produced having average cell size of less than about 60 microns or 50 microns. In some embodiments particularly small cell size is desired, and in these embodiments material of the invention has average cell size of less than about 30 microns, more preferably less than about 20 microns, more preferably less than about 10 microns, and more preferably still less than about 5 microns. The microcellular material preferably has a maximum cell size of about 100 microns or preferably less than about 75 microns. In embodiments where particularly small cell size is desired, the material can have maximum cell size of about 50 microns, more preferably about 35 microns, and more preferably still about 25 microns. A set of embodiments includes all combinations of these noted average cell sizes and maximum cell sizes. For example, one embodiment in this set of embodiments includes microcellular material having an average cell size of less than about 30 microns with a maximum cell size of about 50 microns, and as another example an average cell size of less than about 30 microns with a maximum cell size of about 35 microns. That is, microcellular material designed for a variety of purposes can be produced having a particular combination of average cell size and a maximum cell size preferable for that purpose. Control of cell size is described in greater detail below.

The present invention can provides system and techniques for extrusion blow molding of microcellular and other polymeric foam material, and microcellular parisons suitable for blow molding, that is, parisons that can be subjected to blow molding conditions as described herein to produce articles as described herein. In particular, the invention provides techniques for production of lightweight, strong microcellular articles that can be blow molded to form microcellular polymeric blow molded parisons that can have particularly thin walls. It is a feature that articles can be produced that are free of a non-foam, structurally-supporting material positioned to support the foam article. This means that where a plastic bottle, for example, is produced, the walls of the bottle can be composed entirely of the microcellular foam material, without an auxiliary layer of solid supporting plastic.

The invention involves the discovery that microcellular material overcomes problems associated with certain prior art techniques, in particular, problems in blow molding associated with the inherent relative weakness of conventional thermoplastic polymer foams. Microcellular material of the present invention surprisingly can be blow molded at relatively high pressures, in particular a pressure of at least about 1.5 bar internal of a microcellular parison, in some cases at least about 2.5 bar, in some cases at least about 5 bar, in some cases at least about 7 bar, and in some cases still at least about 10 bar internal of the parison. This strength is achieved even in microcellular parisons including at least some portion having a void volume of at least about 5%, preferably at least about 10%, preferably at least about 20%, more preferably at least about 30%, and in some cases as high as at least about 50% or at least about 70%, even without reinforcing agents, and while forming final microcellular foam products having thin walls, in particular at thicknesses described below. In this regard, microcellular blow molded articles are produced having less than about 10% reinforcing agent by weight, more preferably less than about 5% reinforcing agent, more preferably still less than about 2%, and in particularly preferred embodiments the articles of the invention are essentially free of reinforcing agent.

It also has been surprisingly found that microcellular foam parisons of the invention can be blow molded under relatively severe conditions without a significant change in density in the material. Specifically, a foam parison of the invention can be subjected to blowmolding conditions of at least about 1 bar (15 psi), or 1.2 to 1.34 bar (18 or 20 psi) or other pressures described herein, thereby expanding at least a portion of the parison by at least about 50% and forming a blow-molded article while maintaining a relatively constant density in the material, specifically, increasing the density of the parison by no more than about 20% in going from the parison to the blow-molded article. In preferred embodiments at least a portion of the parison is expanded by at least about 75%, 100%, 150%, 200%, 300%, or at least about 400% in circumference while the density of the parison is increased by no more than about 15%, 10%, 8%, 5% or preferably 3%.

Without wishing to be bound by any theory, it is believed that the microcellular material is particularly suitable to the relatively harsh conditions of blow molding because the cells of the invention, of very small size, are not easily crushed or otherwise distorted. It is believed that as the size of the cells decreases, the force required to cause collapse of an individual cell significantly increases.

The die of the invention can be shaped and controlled to produce blow-molded articles that have sections with differing thicknesses and sections with differing void volume. For example, a blow-molded, square-shaped bottle can be formed that has sections defining its corners that are thicker than remaining portions of the bottle wall. The thicker portions can, e.g., have a void volume of 50% and the thinner wall a void volume of about 10%. These thicker regions are reinforcing regions. Reinforcing regions also can be provided at corners that define the boundary between the bottle wall and the bottle bottom, or the bottle wall and bottle top, or vertical corners, or all of these.

The present invention enables strong, thin-walled articles to be produced that are opaque without the use of opacifiers. This is because polymeric foam diffracts light, thus it is essentially opaque and has a white appearance. It is a feature of the invention that microcellular foams are more opaque, and uniformly so, than conventional foams. This is a significant advantage in connection with articles constructed and arranged to contain material that is subject to destruction upon exposure to light, such as food containers. Such material can involve food consumable by animals such as humans, containing vitamins that can be destroyed upon exposure to light. In a preferred embodiment the invention provides microcellular blow-molded milk containers, as it is particularly known that vitamins in milk can be lost upon exposure to fluorescent light. Milk bottle container producers are reported to introduce pigments into milk bottles, typically high density polyethylene milk bottles, so as to protect milk from vitamin-destroying light. However, pigmented polymeric material is less amenable to recycling. The present invention provides, in one embodiment, thin, opaque, blow-molded containers that include less than about 1% by weight auxiliary opacifer, preferably less than about 0.05% by weight auxiliary opacifer, and more preferably still material that is essentially free of auxiliary opacifer. "Auxiliary opacifer", in the present invention, is meant to define pigments, dies, or other species that are designed specifically to absorb light, or talc or other materials that can block or diffract light. Those of ordinary skill in the art can test whether an additive is an opacifer. Microcellular blow molded articles of the invention have the appearance of essentially solid, white, plastic articles, which offers significant commercial appeal.

Material of the present invention is blown with a physical blowing agent such as an atmospheric gas, in particular carbon dioxide, and thus in this embodiment does not require the added expense and complication of formulating a polymeric precursor to include a chemical blowing agent, that is, a species that will react under extrusion conditions to form a blowing agent.

One advantage of embodiments in which a chemical blowing agent is not used or used is that recyclability of product is maximized. Use of a chemical blowing agent typically reduces the attractiveness of a polymer to recycling since residual chemical blowing agent and blowing agent by-products contribute to non-uniformity in the recyclable material pool.

As mentioned, the present invention provides for blow-molding of relatively high void-volume articles having thin walls, in some embodiments. In particular, the articles have a wall thickness less than about 2.54mm (0.100 inch), more preferably less than about 1.9mm (0.075 inch), more preferably less than about 1.27mm (0.050 inch), more preferably still less than about 1.01mm (0.040 inch), and in some cases as low as 0.63mm, 0.38mm and 0.25mm (0.025 inch, 0.015 inch, or 0.010 inch) or less.

In one set of embodiments the invention represents the solution of problems associated with the extrusion of polymeric foam parisons having a variety of conventional cell sizes, in addition to microcellular parisons, for blow molding, that must be varied in thickness or density. In this set of embodiments the invention provides techniques for producing a polymeric foam parison, which can be microcellular, that varies in thickness, and/or varies in material density, along its length. Specifically, the preferred extruded polymeric foam parison has a first portion and a second portion spaced from the first portion in the parison machine direction, the first portion and the second portion differing in thickness by a factor of at least about 1.1. In other embodiments the first and second portions differ in thickness by factors of at least about 1.3, 1.5, or 1.7. The first and second portions can differ in material density by a factor of at least about 1.1, and in other embodiments by a factor of at least about 1.3, 1.5, or 1.7. The parison is suitable for blow-molding to produce an article including a first portion expanded to a first extent and a second portion expanded at least 1.5 times the first extent, the first and second portions, after expansion, differing in each of thickness, material density, and cellular density by no more than about 5%. In this technique, a polymeric extrusion die is provided that is constructed and arranged to subject a flowing, single-phase solution of molten polymeric material and physical blowing agent that is a gas under atmospheric conditions to a consistent pressure drop rate while varying the annular gap at the die exit to facilitate production of a microcellular polymeric foam parison that varies in thickness along its length. The die is effective in this task by providing the physical separation of nucleation from shaping. That is, nucleation occurs in a consistent manner (an essentially constant pressure drop rate) upstream of shaping, thus differential shaping does not effect cell size, cell density, or material density, substantially. Alternatively or in addition, the parison can be subjected, during extrusion, to differing temperature resulting in differential material density as a function of position in the machine direction.

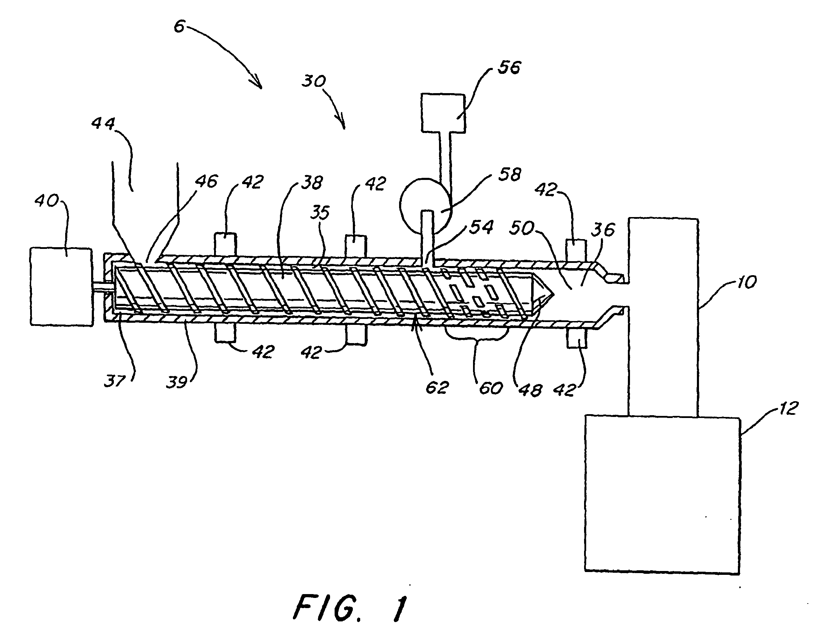

Referring now to Fig. 1, an extrusion blow molding system 6 is illustrated schematically. System 6 includes an extruder 30 fluidly connected to a blow-molding extrusion die 10, and a blow mold 12 positionable to receive a parison of microcellular material from the outlet of the die. Blow mold 12 can be a conventional mold, and is not described in detail here except to say that foam parisons of the invention can be blow molded without heating, thus mold 12 need not include auxiliary heating systems. That is, a foam parison of the invention, preferably a microcellular foam parison, can be extruded and then blow molded in mold 12 without applying heat to the parison in the mold. Extruder 30 includes a barrel 39 having a first, upstream end 37, and a second, downstream end 36 connected to die 10. Mounted for rotation within barrel 39 is a screw 38 operably connected, at its upstream end, to a drive motor 40. Although not shown in detail, screw 38 includes feed, transition, gas injection, mixing, and metering sections. A polymer processing space 35 is defined between the screw and the barrel in which polymeric material is urged downstream.

Positioned along barrel 39, optionally, are temperature control units 42. Control units 42 can be electrical heaters, can include passageways for temperature control fluid, and or the like. Units 42 can be used to heat a stream of pelletized or fluid polymeric material within the barrel to facilitate melting, and/or to cool the stream to control viscosity and, in some cases, blowing agent solubility. The temperature control units can operate differently at different locations along the barrel, that is, to heat at one or more locations, and to cool at one or more different locations. Any number of temperature control units can be provided. Temperature control units also can be supplied to heat a die to which the extrusion system is connected.

Barrel 39 is constructed and arranged to receive a precursor of polymeric material. As used herein, "precursor of polymeric material" is meant to include all materials that are fluid, or can form a fluid and that subsequently can harden to form a microcellular polymeric article, Typically, the precursor is defined by thermoplastic polymer pellets, but can include other species. For example, in one embodiment the precursor can be defined by species that will react to form microcellular polymeric material as described, under a variety of conditions. The invention is meant to embrace production of microcellular material from any combination of species that together can react to form a polymer, typically monomers or low-molecular-weight polymeric precursors which are mixed and foamed as the reaction takes place. Preferably, a thermoplastic polymer or combination of thermoplastic polymers is selected from among amorphous, semicrystalline, and crystalline material including polyaromatics such as styrenic polymers including polystyrene, polyolefins such as polyethylene and polypropylene, fluoropolymers, crosslinkable polyolefins, and polyamides.

Typically, introduction of the pre-polymeric precursor utilizes a standard hopper 44 for containing pelletized polymeric material to be fed into the extruder barrel through orifice 46, although a precursor can be a fluid prepolymeric material injected through an orifice and polymerized within the barrel via, for example, auxiliary polymerization agents. In connection with the present invention, it is important only that a fluid stream of polymeric material be established in the system. From hopper 44 pellets are received into the feed section of screw and conveyed in a downstream direction in polymer processing space 35 as the screw rotates. Heat from extrusion barrel 39 and shear forces arising from the rotating screw, act to soften the pellets within the transition section. Typically, by the end of the first mixing section the softened pellets have been gelated, that is, welded together to form a uniform fluid stream substantially free of air pockets.

Immediately downstream of the downstream end 48 of screw 38 in Fig. 1 is a region 50 which can be a temperature adjustment and control region, auxiliary mixing region, auxiliary pumping region, or the like. For example, region 50 can include temperature control units to adjust the temperature of a fluid polymeric stream prior to nucleation, as described below. Region 50 can include instead, or in addition, additional, standard mixing units (not shown), or a flow-control unit such as a gear pump (not shown). In another embodiment, region 50 can be replaced by a second screw in tandem which can include a cooling region.

Microcellular material production according to the present invention uses a physical blowing agent, that is, an agent that is a gas under ambient conditions.

Along barrel 39 of extruder 30 is a port 54 in fluid communication with a source 56 of a physical blowing agent. Any of a wide variety of physical blowing agents known to those of ordinary skill in the art such as hydrocarbons, chlorofluorocarbons, nitrogen, carbon dioxide, and the like, and mixtures, can be used in connection with the invention and, according to a preferred embodiment, source 56 provides carbon dioxide, or nitrogen, or a mixture thereof as a blowing agent. Supercritical fluid blowing agents are used, particularly supercritical carbon dioxide and/or nitrogen. In particularly preferred embodiments solely carbon dioxide or nitrogen, repsectively, is used. A single-phase solution of polymeric material and blowing agent is created having viscosity reduced to the extent that extrusion and blow-molding is readily accomplished even with material of melt flow no more than about 0.2 g/10 min. A pressure and metering device 58 typically is provided between blowing agent source 56 and port 54. Device 58 can be used to meter the blowing agent so as to control the amount of the blowing agent in the polymeric stream within the extruder to maintain a level of blowing agent at a particular level. In a preferred embodiment, device 58 meters the mass flow rate of the blowing agent. The blowing agent is less than 3%, less than about 2%, or less than about 1.5% by weight blowing agent based on the weight of the polymeric stream and blowing agent.

The systems and methods of the invention allow formation of microcellular material with a nucleating agent. Such agents are used and, in some embodiments, polymeric material including a nucleating agent such as talc is blow molded. It has been discovered, in accordance with the invention, that polymeric material including a filler such as talc adds to the ability to make thicker parts at higher pressures, and improves cell structure. Although not wishing to be bound by any theory, it is believed that use of a nucleating agent such as talc reduces the amount of blowing agent such as carbon dioxide or nitrogen needed, thus the material will have a higher viscosity (since carbon dioxide or nitrogen reduces viscosity in such material). Therefore, the size of nucleating pathways and exit gaps can be increased while maintaining similar extrusion conditions otherwise, resulting in thicker parts. In addition, a nucleating agent such as talc adds to the viscosity of molten polymeric material inherently, allowing formation of thicker parts. In this embodiment of the invention nucleating agent such as talc can be added in an amount of at least 1%, or 2%, or 4%, 5.5% or even 7% or more. In one embodiment talc is added within a range of from 2.5% to 7%. which gives specific advantages described more fully below.

In some embodiments carbon dioxide is used in combination with other blowing agents such as nitrogen, and in other embodiments carbon dioxide is used alone with no other blowing agents present. In other embodiments carbon dioxide can be used with other blowing agents so long as the other blowing agents do not materially alter the blowing process. When nitrogen is used, similarly it can be used alone, in combination with another blowing agent that adds to or changes the blowing agent properties, or in combination with another agent that does not materially change the blowing process.

The pressure and metering device can be connected to a controller (not shown) that also is connected to drive motor 40 and/or a drive mechanism of a gear pump (not shown) to control metering of blowing agent in relationship to flow of polymeric material to very precisely control the weight percent blowing agent in the fluid polymeric mixture.

The described arrangement facilitates a method that is practiced according to several embodiments of the invention, in combination with blow molding. The method involves introducing, into fluid polymeric material flowing at a rate of at least about 10 lbs/hr., a blowing agent that is a gas under ambient conditions and, in a period of less than about 1 minute, creating a single-phase solution of the blowing agent fluid in the polymer. The blowing agent fluid is present in the solution in an amount of at least about 2.0% by weight based on the weight of the solution in this arrangement. In preferred embodiments, the rate of flow of the fluid polymeric material is at least about 18 or 27 kg/hr (40 or 60 lbs/hr), more preferably at least about 36 kg/hr (80 lbs/hr)., and in a particularly preferred embodiment greater than at least about 45 kg/hr (100 lbs/hr). The rate of introduction of blowing agent is matched with the rate of flow of polymer to achieve the optimum blowing agent concentration.

Although port 54 can be located at any of a variety of locations along the barrel, according to a preferred embodiment it is located just upstream from a mixing section 60 of the screw and at a location 62 of the screw where the screw includes unbroken flights.

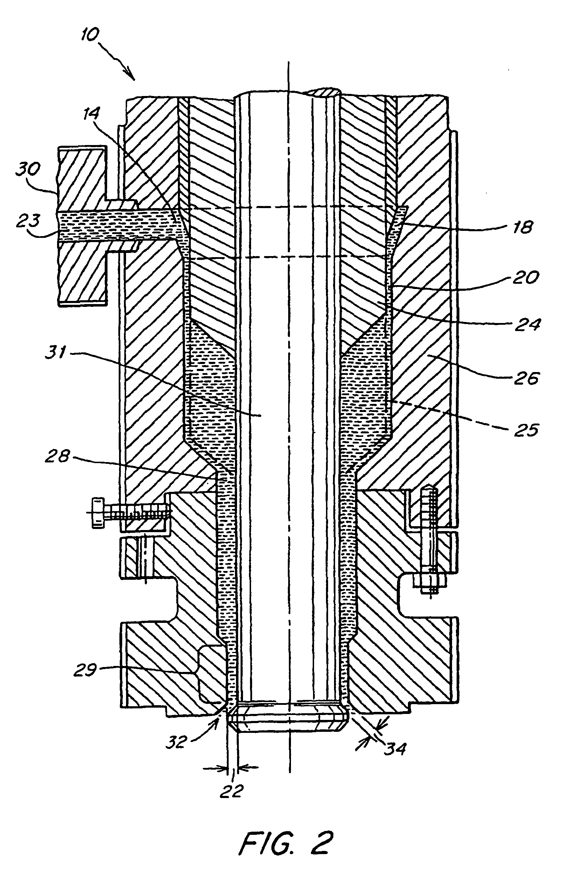

Referring now to Fig. 2, a die 10 is illustrated schematically in cross-section and includes an annular outer die body 26 surrounding an inner die body 24 which, in turn, surrounds an inner mandrel 31. The die includes a fluid inlet 14, constructed and arranged to receive a single-phase, homogeneous solution of polymeric fluid and blowing agent that is a gas under ambient conditions, defined by the junction of the outlet of extruder 30 and a sidewall entrance of the die. Fluid inlet 14 communicates with an annular ring-like void 18 between the outer die body and inner die body that is in fluid communication with an annular channel 20 defined as a gap between the inner die body 24 and outer die body 26. Channel 20 fluidly communicates with an annular section 28 of the die that is of greater width than that of channel 20. Section 28 communicates, in turn, with a narrowed annular portion 29 defining a nucleating pathway having a gap 22 that is of a dimension that creates a rapid pressure drop facilitating nucleation of the single-phase solution fed to the die. At its downstream end nucleating pathway 29 fluidly communicates with an exit 32 of the die having a gap 34. Nucleating pathway 29, as illustrated, has an essentially constant cross-sectional dimension along its length. The pathway can change in cross-sectional dimension along its length as well, for example decreasing in cross-sectional dimension in a downstream direction for particularly high pressure drop rates, as disclosed in U.S. patent application serial no. 08/777,709 and International patent application serial no. PCT/US97/15088. Where the pathway decreases in cross-sectional dimension in a downstream direction, a single-phase solution can be continuously nucleated by experiencing continuously decreasing pressure within successive, continuous portions of the flowing, single-phase stream at a rate which increases.

Die 10 is constructed such that inner die body 24 can move axially relative to outer die body 26. Inner die body 24 can move from an upstream position as illustrated in Fig. 2 to a downstream position in which it almost fills a region indicated as 25. Thus, when inner die body 24 is positioned in an upstream position as illustrated in Fig. 2, region 25 defines an accumulator.

In operation, a single-phase solution 23 of polymeric material and blowing agent is fed from extruder 30 to the die 10, first into annular ring 18, then through channel 20, accumulator 25 (to the extent that inner die body 24 is positioned upstream) and section 28 of the die as a single-phase, non-nucleated solution, is nucleated through a rapid pressure drop occurring at nucleating pathway 29, and is extruded at exit 32 as a parison suitable for blow molding. When it is desired to use the accumulating feature of die 10, exit 32 can be closed (described below) and non-nucleated, single-phase solution 23 of polymeric material and blowing agent can be fed from extruder 30 into accumulator 25 while inner die body 24 moves in an upstream direction. A load can be applied to inner die body 24 in a downstream direction, during this procedure, to maintain in accumulator 25 an essentially constant pressure that maintains the polymer/blowing agent solution in a non-nucleated, single-phase condition. Then, exit 32 can be opened and inner die body 24 driven in a downstream direction to nucleate and extrude a microcellular parison. This feature allows for an extruder to be run continuously while parison extrusion occurs periodically.

While polymeric material nucleated in nucleating pathway 29 can include nucleating agent in some embodiments, in other embodiments no nucleating agent is used. In either case, the pathway is constructed so as to be able to create sites of nucleation in the absence of nucleating agent whether or not nucleating agent is present. In particular, the nucleating pathway has dimensions creating a desired pressure drop rate through the pathway. In one set of embodiments, the pressure drop rate is relatively high, and a wide range of pressure drop rates are achievable. A pressure drop rate can be created, through the pathway, of at least about 0.1 GPa/sec in molten polymeric material admixed homogeneously with about 6 wt % CO₂ passing through the pathway of a rate of about 18 kg (40 pounds) fluid per hour. Preferably, the dimensions create a pressure drop rate through the pathway of at least about 0.3 GPa/sec under these conditions, more preferably at least about 1 GPa/sec, more preferably at least about 3 GPa/sec, more preferably at least about 5 GPa/sec, and more preferably still at least about 7,10, or 15 GPa/sec. The nucleator is constructed and arranged to subject the flowing stream to a pressure drop at a rate sufficient to create sites of nucleation at a density of at least about 10⁷ or, preferably, 10⁸ sights/cm³. The apparatus is constructed and arranged to continuously nucleate a fluid stream of single-phase solution of polymeric material and flowing agent flowing at a rate of at least 9 kg/hr (20 lbs/hour), preferably at least about 18 kg/hr (40 lbs/hour), more preferably at least about 27 kg/hr (60 lbs/hour) more preferably at least about 36 kg/hr (80 lbs/hour) and more preferably still at least about 46, 90 or 180 kg/hr (100, 200, or 400 lbs/hour).

Die 10 is constructed such that mandrel 31 can move axially relative to the remainder of the die. This allows for exit 32 to be closed, if desired, by moving mandrel 31 in an upstream direction so as to seal the inner die lip against the outer die lip.

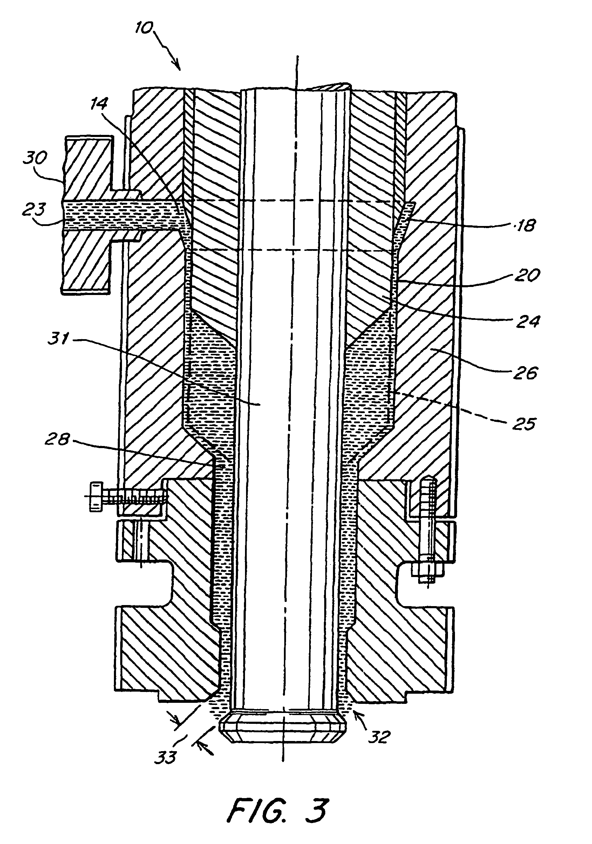

Referring now to Fig. 3, die 10 is illustrated with mandrel 31 extended distally such that exit 32 includes a gap 33 that is significantly widened relative to gap 34 as illustrated in Fig. 2. This can be effected while maintaining a constant gap 22 in nucleating section 29 of the die. Thus, nucleation of the single-phase polymer/blowing agent fluid stream takes place at a constant pressure drop rate while the die can produce a parison that varies in thickness. A controller actuates the mandrel such that exit 32 widens and narrows to produce a parison having varied thickness as desired. A microcellular product varying in thickness in a machine direction while having essentially uniform microcellular structure as is produced using die 10 are described above.

The invention also allows co-extrusion of foam or microcellular foam articles. Although a die for extrusion of such an article with two or more layers is not illustrated, it can be clearly understood with reference to Fig. 2. A multi-layer extrusion die, in one embodiment, includes co-axial, separate, pathways defining nucleating sections that feed together into a single exit 32. That is, the die includes a nucleating section 29 as illustrated in Fig. 2, and an additional nucleating section spaced radially outwardly from nucleating section 29 and fed by a separate section similar to section 28. Simultaneous, separate nucleation of separate layers is followed by joining of the nucleated layers slightly before or at gap 32 where combination of the layers and shaping and ejection of the layers takes place.

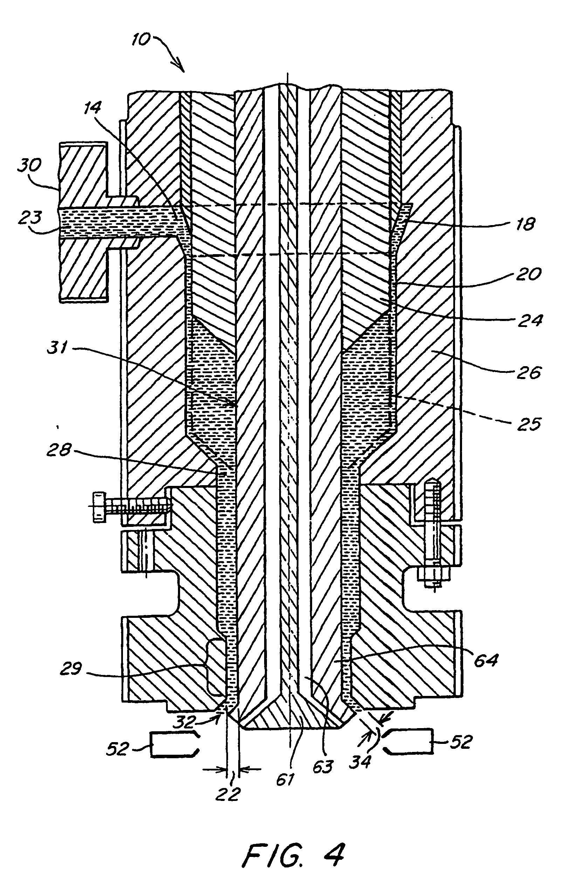

The invention enables a microcellular polymeric parison to be extruded that differs in material density along its length. In this embodiment the parison can differ in thickness along its length, as well. This can be accomplished using the system illustrated in Fig. 4 in which die 10 is provided that is similar to the die of previous figures. Die 10 need not necessarily include a mandrel that is movable axially during extrusion to produce a parison of varying thickness, but includes an air ring 52 for subjecting the parison, during extrusion, to varying conditions of cooling. The air ring can subject different portions of the parison to different cooling conditions, thus reducing cell growth in certain portions of the parison relative to other portions. In a similar manner, selected sections of the internal surface of the parison can be cooled by passing air through a channel 63 formed in mandrel 31 between an inner mandrel part 61 and an outer mandrel part 64. Internal air cooling can be used alternately or in conjunction with external air cooling via air ring 52. The resulting parison can be blow molded and can be created such that some sections are relatively higher in material density than others. Sections subjected to different cooling immediately post-extrusion experience different cell growth and therefore different density.

The system of Fig. 4 can be used also to produce a blow-molded article having increased density at locations where greater strength is required. For example, in a plastic beverage container including a threaded mouth for receiving a screw-on cap, the threaded mouth might desirably be made of higher material density for added strength than the remainder of the bottle.

With the present invention, the microcellular extruded parison of the invention is better able to withstand blowing conditions than many prior art foam parisons. This is because of the greater resistance of smaller cells to the pressure exerted during blowing. Many prior art foams will exhibit cell collapse when exposed to blow molding conditions. However, as cell size decreases, greater pressure is required to cause cell collapse.

In one embodiment of the invention, a microcellular parison is co-extruded with an auxiliary polymeric layer that can be internal of or external of the microcellular parison, or both. The auxiliary material can be foam or non-foam and can be added to create a particular appearance (for example when a colored article is desired, a microcellular foam core can be covered with a colored, co-extruded layer). Also, a co-extauded layer may be added to provide good printability on an article or to provide a particular surface texture. Other characteristics such as chemical compatibility, and the like are contemplated. In some cases, a co-extruded layer may be used, internally or externally of a microcellular parison core, to isolate the core from internal contents of the article, or external environment. This can be useful to increase the use of recycled material in the core. The auxiliary, co-extruded layer, in preferred embodiments, is not necessary for structural support. That is, the microcellular parison could be blow-molded and would provide adequate structural support on its own, and the co-extruded layer is for purposes of surface modification only. In one embodiment, an auxiliary non-foam, non-structurally-supporting layer is provided adjacent the foam article. This layer can be designed for specific barrier properties (for example, for compatibility with material to be contained in the article or to ensure certain material is kept out for Federal or other regulation requirements).

The production of blow-molded microcellular polymeric articles in accordance with the invention is surprising since desirable characteristics for polymers for blow molding are different from those characteristics desired in typical extrusion processes. For blow molding, typically high-molecular-weight, high-viscosity polymers are needed to withstand, successfully, blow molding conditions. In contrast, in standard extrusion it is desirable to use lower-molecular weight, tower-viscosity polymers for high throughput. Thus, extrusion blow molding includes an inherent dichotomy that adds even more complication when foams are used. For controlled foaming, higher-molecular weight, higher-viscosity polymers are favored to prevent uncontrolled foaming resulting in open-celled material.

The present invention provides successful high-throughput microcellular polymeric extrusion blow molding since higher-molecular weight polymers can be used while reducing viscosity via supercritical fluid blowing agent incorporation. Relatively high molecular weight polymers are reduced in viscosity via the supercritical fluid blowing agent for high-throughput extrusion, yet at extrusion and gasification of the blowing agent the high-molecular weight polymer provides the strength needed for well-controlled microcellular foaming. Therefore, as noted above, extrusion and blow molding of foam polymeric material, preferably microcellular foam polymeric material, can be accomplished with material of melt flow ono more than about 0.2 g/10 min, preferably no more than about 0.12 g/10 min, more preferably no more than about 0.1 g/10 min.

The present invention can provide a semi-crystalline microcellular foam having a mid-range level of nucleating agent. The foam includes between 2.5 weight percent and 7 weight percent of these agents. In preferred embodiments, the foam includes between 3 and 7 weight percent nucleating agent, and in some embodiments between 5 weight percent and 7 weight percent nucleating agent. The level nucleating agent in the present foam is, generally, greater than the levels used as nucleating agents, flame retardents, or pigments in conventional foam processing. These semi-crystalline microcellular foams containing 2.5-7 weight percent nucleating agent can be used in connection with any of the blow molding aspects of the invention described above.

The nucleating agents can be any of a variety of materials and in any number of forms, as known in the art. In certain embodiments, the nucleating agents are inorganic solids such as those commonly used in the art, for example talc, calcium carbonate (CaCO₃), titanium oxide (TiO₂), barium sulfate (BaSO₄), and, zinc sulfide (ZnS). In certain embodiments, organic solids, such as cellulosic fibers, may also function as nucleating agents. The foams, in some cases, may include more than one type of nucleating agent such that the sum total of all of the nucleating agents is between 2.5 weight percent and 7 weight percent. In particular, microcellular foams including both talc and titanium oxide have been produced.

Typically, the nucleating agents are particles, though in some cases the nucleating agents may be fibrous or have other forms. The nucleating particles can have a variety of shapes such as spherical, cylindrical, or planar. Generally, the particles have a size in the range of about 0.01 microns to about 10 microns, and more typically between about 0.1 microns and 1.0 microns. In some embodiments, the particles may be surface treated with a surfactant to enhance dispersibility within polymer melt and to prevent particle agglomeration.

In some cases, the nucleating agents, depending on their composition, may also function as pigments, flame retardents or any other typical additive. In the 2.5-7 weight percent range, the agents also function as fillers. That is, the nucleating agents replace solid plastic in a non-negligible amount which, in certain embodiments, leads to cost savings because filler is less expensive than the solid plastic. In certain embodiments, the agents also may enhance the mechanical properties of the microcellular foam. In some cases, the particles may enhance crystallinity.

The present microcellular foam including about 2.5-7 weight percent nucleating agent can be composed, at least in part, of any semi-crystalline polymer. Typical semi-crystalline polymers include, but are not limited to, the following materials: polyethylene terephthalate (PET), polylactic acid, nylon 6, nylon 6/6, polyethylene, polypropylene, syndiotactic polystyrene, and polyacetal. In certain cases, the semi-crystalline polymer may be blended with non-semi-crystalline polymers. The semi-crystalline polymer may also be blended with other semi-crystalline polymers. In preferred cases, the semi-crystalline material is a polyolefin. In some cases, the semi-crystalline material is polypropylene. Polypropylene may be present as one of multiple polymeric components. In other embodiments, the polymeric material can consist essentially of polypropylene, that is, the polymeric material includes no other polymeric components other than polypropylene, but may include other additives, as described further below, in addition to the nucleating agent. In another set of preferred embodiments the semi-crystalline material is high-density polyethylene. High-density polyethylene, in some cases, is present as one of multiple polymeric components. In preferred cases, the weight percentage of high-density polyethylene is greater than 80% by weight polymeric material. In some preferred cases, the weight percentage of high-density polyethylene is greater than 90% by weight polymeric material. In a particularly preferred case the polymeric material consists essentially of high density polyethylene, that is, the polymeric material includes no other polymer components other than high-density polyethylene, but may include other additives, as described further below, in addition to the nucleating agent.

Optionally, the foam composition may also include other additives, as known in the art, in addition to the nucleating agents. Such additives may be processing aids such as plasticizers (e.g. low-molecular weight organic compounds), lubricants, flow enhancers, and anti-oxidants. In many preferred cases, the polymeric material is essentially free of residual chemical blowing agents and reaction by products because only physical blowing agents are used in the process. In particular, many high-density polyethylene foams are essentially free of residual chemical blowing agents and reaction by-products.

Surprisingly, even though the amount of nucleating agent is greater than 2.5 weight percent, the foams have a relatively uniform and fine cell structure. The nucleating agents have not led to the presence of anomalous large cells in the foams. Foam articles, according to this aspect of the invention, have an average cell size of less than about 60 microns, or other preferred average cell sizes or maximum cell sizes, or combinations, described above.

The cell structure of the microcellular foam, preferably, is a closed cell structure. It is believed that the closed cell structure may, advantageously, contribute to enhancing the mechanical properties of the foam due to the absence of a long interconnected pathway which could act as a site that leads to premature failure of the material.

With the invention, microcellular foams can be produced over a wide range of densities. In many embodiments, the void volume is greater than 10%, in other embodiments greater than 20%, and in still other embodiments greater than 50%. In another set of embodiments, the microcellular foam has a void volume of less than 50%, and in some embodiments less than 30%. In a particularly preferred embodiment, the microcellular foam has a void volume between about 10% and about 50%. Foams within this preferred void volume range (10% to 50%) exhibit excellent mechanical properties such as tensile strength and tensile modulus, while still having a significant density reduction from the solid plastic.

An unlimited variety of semicrystalline microcellular foam articles are embraced by this aspect of the invention. Articles may be extruded, blow molded, injection molded into an unlimited number of shapes and forms. Extruded sheet can also be thermoformed. The foamed articles, in certain embodiments, are generally thinner than conventional foam articles because the cell sizes in the microcellular foam articles are smaller than the cell sizes in conventional foams. In certain cases, the articles have at least one portion having a thickness of less than 2.54 mm (0.1 inches,) in other cases less than 1.3mm (0.05 inch), and in other cases less than 0.25 mm (0.01 inch) in many cases, the microcellular foam articles have a desirable surface quality because the articles can be produced with low blowing agent percentages, thus limiting the amount of gas that diffuses through the foam surface. As is known in the field of microcellular foam processing, large quantities of gas that diffuse through the surface can lead to surface roughness and imperfections, in some cases.

An extrusion system for the production of microcellular foam having a midlevel amount of nucleating agent can be similar to that illustrated in Fig. 1, with optional replacement of blow mold die 10 and blow mold apparatus 12 with an extrusion die for recovery of extrudate that is not significantly further processed, and/or a mold for injection molding.

As is well known in the art, in some cases, the nucleating agent may be added in a concentrate blend with the semicrystalline polymer in pellet form. That is, nucleating agent particles are dispersed in pellets of semicrystalline polymer in concentrated percentages, for example 40% by weight. The concentrated pellets are blended with suitable amounts of semicrystalline pellets to produce a polymeric material having between 2.5 and 7 weight percent nucleating agent. In this fashion, the percentage of talc in the polymeric material composition can be adjusted by controlling the ratio of concentrate to pure polymer pellets. In other embodiments, also well known to those skilled in the art, nucleating agents in particulate form may be added directly to the polymeric material. Any other techniques well known in the art may also be employed for incorporating the nucleating agents into the polymer composition in controllable amounts.

Surprisingly, in some embodiments, it has been discovered that the present microcellular semicrystalline foam can be formed using relatively low blowing agent percentages. The presence of the nucleating agent is believed to enhance the driving force for nucleation thus enabling the production of microcellular foam at low blowing agent percentages, for example less than 1.5 percent blowing agent by weight of polymeric stream and blowing agent. In preferred embodiments, the process involves adding less than 1.0 weight percent blowing agent, and in other preferred cases, the process involves adding less than 0.1 percent, by weight of polymeric stream and blowing agent.

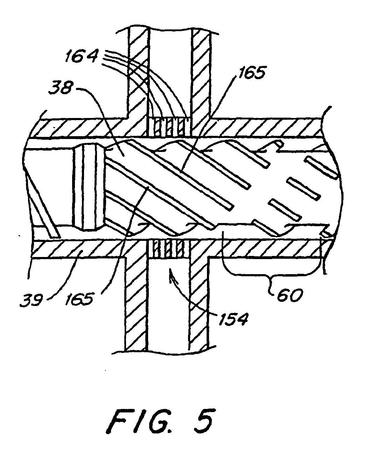

Referring now to Fig. 5, a preferred embodiment of the blowing agent port is illustrated in greater detail and, in addition, two ports on opposing top and bottom sides of the barrel are shown. In this preferred embodiment, port 154 is located in the gas injection section of the screw at a region upstream from mixing section 60 of screw 38 (including highly-broken flights) at a distance upstream of the mixing section of no more than about 4 full flights, preferably no more than about 2 full flights, or no more than 1 full flight. Positioned as such, injected blowing agent is very rapidly and evenly mixed into a fluid polymeric stream to promote production of a single-phase solution of the foamed material precursor and the blowing agent.

Port 154, in the preferred embodiment illustrated, is a multi-hole port including a plurality of orifices 164 connecting the blowing agent source with the extruder barrel. As shown, in preferred embodiments a plurality of ports 154 are provided about the extruder barrel at various positions radially and can be in alignment longitudinally with each other. For example, a plurality of ports 154 can be placed at the 12 o'clock, 3 o'clock, 6 o'clock, and 9 o'clock positions about the extruder barrel, each including multiple orifices 164. In this manner, where each orifice 164 is considered a blowing agent orifice, the invention includes extrusion apparatus having at least about 10, preferably at least about 40, more preferably at least about 100, more preferably at least about 300, more preferably at least about 500, and more preferably still at least about 700 blowing agent orifices in fluid communication with the extruder barrel, fluidly connecting the barrel with a source of blowing agent.

Also in preferred embodiments is an arrangement (as shown in Fig. 5) in which the blowing agent orifice or orifices are positioned along the extruder barrel at a location where, when a preferred screw is mounted in the barrel, the orifice or orifices are adjacent full, unbroken flights 165. In this manner, as the screw rotates, each flight, passes, or "wipes" each orifice periodically. This wiping increases rapid mixing of blowing agent and fluid foamed material precursor by, in one embodiment, essentially rapidly opening and closing each orifice by periodically blocking each orifice, when the flight is large enough relative to the orifice to completely block the orifice when in alignment therewith. The result is a distribution of relatively finely-divided, isolated regions of blowing agent in the fluid polymeric material immediately upon injection and prior to any mixing. In this arrangement, at a standard screw revolution speed of about 30 rpm, each orifice is passed by a flight at a rate of at least about 0.5 passes per second, more preferably at least about 1 pass per second, more preferably at least about 1.5 passes per second, and more preferably still at least about 2 passes per second. In preferred embodiments, orifices 154 are positioned at a distance of from about 15 to about 30 barrel diameters from the beginning of the screw (at upstream end 34).

Referring again to Fig. 1, mixing section 60 of screw 38, following the gas injection section, is constructed to mix the blowing agent and polymer stream to promote formation of a single phase solution of blowing agent and polymer. The mixing section includes unbroken flights which break up the stream to encourage mixing. Downstream the mixing section, a metering section builds pressure in the polymer-blowing agent stream. Where a die is used that released shaped extrudate according to the die shape, the die includes inner passageways having shape and dimensions (die geometry) to control the shape of the extrudate. The die, in this embodiment, can have any of a variety of configurations, as is known in the art, to produce microcellular foam in specific forms, for example, sheets, profiles, or strands. Dies described in international patent publication no. WO 98/08667 can be used. In addition to shaping extrudate released from such a die, the die can also perform the function of nucleating the single-phase solution of polymeric matieral and blowing agent. As described above with respect to Figs. 2-4, as the pressure in the single-phase solution drops as the solution flows through die internal passageways, solubility of the blowing agent in the polymer decreases, which is the driving force for cell nucleation. The extent of pressure drop depends upon the dimensions of the passageway. Specifically, the dimensions that effect pressure dropping include the shape of the passageway, the length of the passageway, and the thickness of the passageway. Under processing conditions, the pressure drop across the die is generally greater than 67 bar (1,000 psi) preferably greater than 134 bar (2,000 psi) and more preferably greater than 200 bar (3,000 psi).

Dies of the invention can be also configured, as known in the art, to provide a pressure drop rate (dP/dt) as the single-phase solution flows across the passageway. Pressure drop rate, which depends upon die geometry and flow rate, also effects the cell nucleation process. Typically, a sufficient pressure drop rate must be induced to achieve appropriate nucleation conditions for microcellular material. The presence of the nucleating agent at an amount between 2.5-7% by weight is believed to lower the pressure drop rate required. In certain cases, it is desirable to use a process that employs low pressure drop rates. Lower pressure drop rates, generally, allow for more freedom in die construction and resulting article dimensions. In certain embodiments, the pressure drop rate in the solution is less than 1.0 GPa/s, in some embodiments less than 0.10 GPa/s, and, in some embodiments less than 0.05 GPa/s. In other embodiments, higher pressure drop rates are utilized, for example, in the production of certain thin products. In some cases, the pressure drop rate is greater than 1.0 GPa/s, in others greater than 5.0 GPa/s, and in others greater than 10.0 GPa/s.

In another embodiment, not illustrated, the pressure drop rate is induced in at least one nucleating pathway prior to or within the die. Such configurations are described in co-pending international patent publication no. WO 98/08667.

As a result of elevated temperatures, extrudate that is released from a die is typically soft enough so that the nucleated cells grow. As the extrudate cools in the atmosphere and becomes more solid, cell growth is restricted. In certain embodiments, it is advantageous to provide external cooling means to speed the cooling rate of the extrudate. For example, in these embodiments, cooling may be accomplished by blowing air on the extrudate, contacting the extrudate with a cool surface, or submerging the extrudate in a liquid medium. Other equipment (not illustrated) downstream of the die can be used, as required, for additional shaping of the extrudate into a final form.

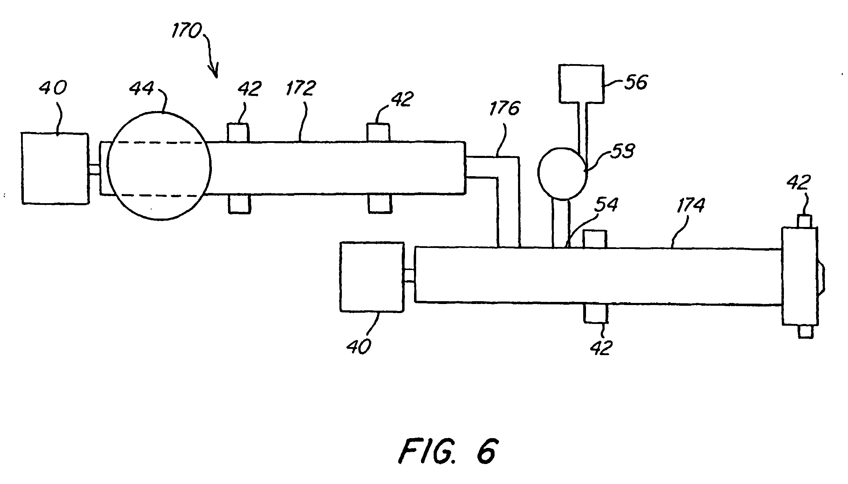

Referring to Fig. 6, an alternative extrusion system 170 for producing microcellular foam in accordance with the invention includes a tandem extruder line. The tandem line includes a primary extruder 172 and a secondary extruder 174 arranged in parallel configuration and connected through a transfer pipe 176. As described above, pellets are supplied into the primary extruder through hopper 44. In some embodiments, the secondary extruder includes blowing agent injection port 54, as illustrated. In other embodiments, the primary extruder includes the blowing agent injection port.

In other embodiments, the systems of Figs. 5 and 6 are modified, as known in the art, to function as injection molding systems. Particularly preferred injection molding systems are described in international patent publication no. WO 98/31521. Generally, injection molding systems do not include an extrusion die, but rather include a pathway fluidly connected to the polymer processing space through which the polymer and blowing agent solution is injected into the mold.

Generally, the die is constructed to provide HDPE sheet or tubes of thin walls. More specifically, the die can be constructed to provide HDPE parisons for blow molding applications. In this aspect the invention involves the discovery that a specific range of taper angles of a converging nucleating microcellular polymeric die provides HDPE extrudate, including parisons for blow molding, that do not strip, or tear in the extrusion process and that include are more uniform in surface appearance.

Specifically, in this aspect a polymer forming die is provided that includes a nucleating pathway that decreases in cross section in a downstream direction with an included angle of greater than 4°. Preferably, the included angle is greater than 6°. In one embodiment the angle is between 4° and 18°, preferably between 4° and 8°. "Included angle", as used herein, means the total angle of downstream-direction taper. For example, in an annular die in which the exterior wall tapers inwardly at 4° and the interior wall, defined by the exterior of a mandral, has no taper, the included angle is 4°. In an identical situation in which the mandral tapers outwardly at 2°, the included angle would be 6°.

The taper angle of the die of the may define a particular time between initiation of nucleation in the die and release from the die exit, and this timing defines another aspect of the invention. Specifically, a method is provided that involves releasing a nucleated stream as a polymeric microcellular extrudate from an outlet of a die in a period of time of no more than about 0.001 second after nucleation, within the die, of a single-phase, non-nucleated solution of polymeric material and blowing agent.

The invention involves the discovery of a problem in the extrusion of HDPE sheet or thin profiles. It has been discovered that under microcellular extrusion conditions where a parallel type nucleator is used extrudate, especially HDPE parisons for blow molding, tend to strip during the extrusion process. Normal microcellular conditions, in these cases, are described by using a nucleator that creates the necessary pressure drop rate required to form small cells and using typical conditions of blowing agent content and melt temperature. Stripping is defined as a condition in which extrudate, upon exiting a die, tears at one or more locations along the length of the die. This tearing interferes with the formation of a uniform extrudate, resulting in the formation of long, thin strips of microcellular material. Each strip is the result of the complete severing of the extrusion at each of the locations of the observed tear. This phenomena has been observed in HDPE and has not been observed in other materials tested, including polypropylene, and is thought to be caused by the highly linear nature of the HDPE molecule and the ease with which the molecules slip past one another under low force.

The problem of HDPE stripping can be alleviated by using a tapered die (a die that decreases in cross section in a downstream direction) of a very specific included taper angle. The taper angle minimum is dictated by the ability to overcome this stripping problem and still provide a minimum pressure drop rate necessary to make microcellular material. Angles of less than about 4 degrees do not generate the required pressure drop rate for microcellular material at commercially reasonable rates and at acceptable total pressure drops. At angles of 6 degrees and greater, a sufficient pressure drop rate can be achieved and the stripping problem is completely overcome. A maximum angle exists that still makes an acceptable structure. A angles greater than about 18 degrees, the microcellular structure tends to blow itself apart, resulting in very poor cell structures for blow molding purposes.

The result of stripping prevention was unexpected. Although not wishing to be bound by any theory, it is believed that the tapered die works because there is a critical location where the beginning of nucleation occurs. This location is defined by the point at which the pressure in the polymer/blowing agent melt (single-phase, non-nucleated solution of polymeric material and blowing agent) is reduced below the saturation pressure of the blowing agent in the polymer. If this location is too far away from the exit of the die (measured not by distance, but by residence time or the time it takes the nucleated polymer to travel from the initial nucleation point to the end of the die where release of polymer extrudate occurs), then stripping occurs when shear forces on the growing cell acts for too long a time resulting in tearing of the melt. If the location is closer to the exit than this critical point, then the foaming melt does not undergo enough shear to cause tearing. In parallel nucleators, where pressure drop rate is constant throughout the nucleation land length and pressure decreases linearly throughout the nucleator, the point of nucleation occurs too far from the exit of the die. In tapered dies, where pressure drop rate increases throughout the nucleator and pressure decreases mostly near the die exit, the point of nucleation is very close to the die exit. The result is that shearing acts over only a short period of time and no stripping occurs. The proposed theory compels selection of a specific taper angle that both eliminates stripping and allows for the standard conditions of pressure drop rate to be met.

Microcellular material produced according to the present disclosure can be used in blow molding processes, for example in production of blow molded bottles. Additionally, sheets of microcellular polymeric material, including microcellular HDPE, either in flat die or annular die designs, can be made. Material so made also can be thermoformed. In one embodiment, the die of the invention provides the ability to change parison thickness by movement of the inner pin of the die with respect to the outer die body.

In addition to die angle and gap opening, the specific dies can also be described by the pressure and pressure drop rate needed to make defect free, microcellular parisons.

In one set of embodiments, foam articles that consist essentially of high-density polyethylene (HDPE), are formed without the use of a chemical blowing agent. High-density polyethylene , as used herein, refers to polyethylene having a density of greater than 0.94 g/cm³. Low-density polyethylene refers to polyethylene having a density of less than 0.94 g/cm³. In such articles, HDPE is essentially the only polymeric component but the article includes any variety of additives as known in the art, such as a nucleating agent. Such articles thus, are essentially free of residual chemical blowing agent and reaction-by-products of chemical blowing agent. In some embodiments of this set, the HDPE foam articles are microcellular foams having average cell sizes of less than 100 microns. In certain cases, the microcellular foams have average cell sizes of less than 50 microns, and in some cases less than 20 microns. In other embodiments of this set, the HDPE foams are conventional foams having average cell sizes of greater than 100 microns. The articles can be produced over a broad range of densities. In certain embodiments, the void volume is greater than 10%, in some embodiments greater than 20%, in other embodiments greater than 50%. In a preferred set of embodiments, the article has a void volume of between 10% and 40%.

The process of forming the high-density polyethylene foam articles employs the use of a physical blowing agent, as described above. In this set of embodiments, HDPE foam articles are produced that have a shape essentially identical to that of a continuous extrudate, or a shape essentially identical to that of the interior of a mold. That is, the foam articles are produced by continuous extrusion, or molding, including blow-molding. Although some cell growth can occur following extrusion, or following molding, the articles retain shapes that are closely reminiscent of the extrudate or of the mold. This is to distinguish articles that are extruded or molded in an un-foamed state, and then later foamed by, for example, saturation with blowing agent and expansion, as occurs in typical prior art batch processes.

The function and advantage of these and other embodiments of the present invention will be more fully understood from the examples below. The following examples are intended to illustrate the benefits of the present invention, but do not exemplify the full scope of the invention.

### Example 1 - System for Blow Molding

A tandem extrusion line including a 2 ½ mm 32:1 L/D single screw primary extruder (Akron Extruders, Canal Fulton, OH) and a 3 36:1 L/D single screw secondary extruder (Akron Extruders, Canal Fulton, OH) was arranged in a right angle configuration. A volumetric feeder capable of suppling up to 13.6 kg/hr (30 lb/hr) was mounted in the feed throat of the primary extruder such that compounded talc additive pellets could be metered into the primary extruder. An injection system for the injection of CO₂ into the secondary was placed at approximately 8 diameters from the inlet to the secondary. The injection system included 4 equally spaced circumferential, radially- positioned ports, each port including 176 orifices, each orifice of 0.5 mm (0.02 inch) diameter, for a total of 704 orifices. The injection system included an air actuated control valve to precisely meter a mass flow rate of blowing agent at rates from 0.091 to 5.4 kg/h (0.2 to 12 lbs/hr) at pressures up to 350 bar (5500 psi).

The screw of the primary extruder was specially designed screw to provide feeding, melting and mixing of the polymer/talc concentrate followed by a mixing section for the dispersion of blowing agent in the polymer. The outlet of this primary extruder was connected to the inlet of the secondary extruder using a transfer pipe of about 0.61m (24 inches) in length.

The secondary extruder was equipped with specially designed deep channel, multi-flighted screw design to cool the polymer and maintain the pressure profile of the microcellular material precursor, between injection of blowing agent and entrance to a gear pump (LCI Corporation, Charlotte, NC) attached to the exit of the secondary. The gear pump was equipped with an integral jacket for heating/cooling and sized to operate at a maximum output of 113 kg/hr (250 lb/hr) with a rated maximum discharge pressure of 690 bar (10,000 psi).

The system was equipped, at exit from the gear pump, with a die adapter and a vertically mounted blow molding die (Magic Company, Monza, Italy). The die adapter was equipped with taps for measurement of melt temperature and pressure just prior to entry into the die. The blow molding head included a conventional spider type flow distribution channel and a die adjustment system that allowed movement of the die relative to the fixed position tip providing a variety of exit gaps depending on the chosen tooling.

A two-piece bottle mold was mounted in a fixture for the hand molding of sample bottles as a secondary process. One half of the mold was mounted stationary in the fixture with the other half mounted on linear slides. Quick acting clamps mounted on the stationery half of the mold provided the mechanism to clap the mold shut. A short section of steel tubing sharpened to a point attached to a 0-3.45 bar (0 - 50 psi) regulator using a length of flexible hose provided the blow system. Mold diameter varied from approximately 25mm (1 inch) in the cap area to 51 to 76mm (2 to 3 inches) in the body of the bottle. The overall cavity length of the bottle mold was approximately 254mm (10 inches).

### Example 2: Parison and bottle formation

High density polyethylene (Equistar LR 5403) pellets were introduced into the main hopper of extrusion line described in example 1 and a precompounded talc concentrate (50% talc in a HDPE base) was introduced in the additive feeder hopper. The tooling attached to the blow molding head included a die with a 16.8mm (0.663 inch) exit diameter and 6.2° taper angle and a tip of 16.1mm (0.633 inch) exit diameter and 2° taper angle. The combination of this tip and die provides an 8.2° included convergence angle.

The extruder and gear pump rpm were adjusted to provide an output of approximately 95.3 kg/hr (210 lb/hr) at speeds of approximately 78 rpm on the primary, 32 rpm on the secondary and 50 rpm of the gear pump. Secondary barrel temperatures were set to maintain a melt temperature of approximately 157°C (315° F) at entrance to the die. The additive feeder was set to provide an output of approximately 5kg/hr (11 lb/hr) resulting in a 2.7% by polymer weight talc in the material. CO₂ blowing agent was injected at a nominal rate of 1.5 kg/hr (3.3 lb/hr) resulting in a 1.6% by polymer weight blowing agent in the material.

The above conditions produced a parison that was 1.14mm (0.045 inch) thick by approximately 33mm (1.3 inches) in diameter at a density of 0.74 gm/cc. Based on a nominal solid material density of 0.95 gm/cc, the achieved density reduction is 23 %.

Sample bottles were produced in the following manner: A parison of approximately 406mm (16 inches) in length was extruded, manually removed from the extruder and immediately positioned in the mold. The mold halves were quickly closed and clamped. With the air regulator set to 1.4 bar (20 psi) the sharpened tube was then used to pierce the parison at the top of the mold and introduce the air into the ID of the parison now closed at end of the mold,

The above conditions produced a bottle of 0.38mm (0.015 inch) thick by approximately 64mm (2.5 inches) in diameter at a density of 0.70 gm/cc.

### Example 3: Parison and bottle formation

High density polyethylene (Equistar LR 5403) pellets were introduced into the main hopper of an extrusion line described in example 1 and a precompounded talc concentrate (50% talc in a HDPE base) was introduced in the additive feeder hopper. The tooling attached to the blow molding head included a die with a 0.675 exit diameter and 4.0° taper angle and a tip of 1.61mm (0.633 inch) exit diameter and 2° taper angle. The combination of this tip and die provided a 6.0° included convergence angle.

The extruder and gear pump rpm were adjusted to provide an output of approximately 82 kg/hr (180 lb/hr) at speeds of approximately 66 rpm on the primary, 30 rpm on the secondary and 40 rpm of the gear pump. Secondary barrel temperatures were set to maintain a melt temperature of approximately 154°C (310°F) at entrance to the die. The additive feeder was set to provide an output of approximately 8.2kg/hr (18 lb/hr) resulting in a 5,3 % by polymer weight talc in the material. N₂ blowing agent was injected at a nominal rate of 0.27kg/hr (0.6 lb/hr) resulting in a 0.33% by polymer weight blowing agent in the material.

The above conditions produced a parison that was 2.03mm (0.080 inch) thick by approximately 30.5mm (1.2 inches) in diameter at a density of 0.69 gm/cc. Based on a nominal solid material density of 0.95 gm/cc, the achieved density reduction is 29 %.

Sample bottles were produced in the following manner: A parison of approximately 406 mm (16 inches) in length was extruded, manually removed from the extruder and immediately positioned in the mold. The mold halves were quickly closed and clamped. With the air regulator set to 2.76 bar (40 psi) the sharpened tube was then used to pierce the parison at the top of the mold and introduce the air into the ID of the parison now closed at end of the mold.

The above conditions produced a bottle of 0.94mm (0.037 inch) thick by approximately 51mm (2.0 inches) in diameter at a density of 0.79 gm/cc.

### Example 4. Extrusion of Microcellular Polypropylene Material Without Filler (reference)

A tandem extrusion line (Akron Extruders, Canal Fulton, OH) was arranged including a 64 mm (2.5 inch), 32/1 L/D primary extruder and a 76mm (3.0 inch), 34/1 L/D secondary extruder. An injection system for injection of CO₂ into the primary was placed at a distance of approximately 20 diameters from the feed section. The injection system included 4 equally-spaced circumferentially, radially-positioned ports, each port including 176 orifices, each orifice of 0.51mm (0.02 inch) diameter, for a total of 704 orifices.

The primary extruder was equipped with a two-stage screw including conventional first-stage feed, transition, and metering sections, followed by a multi-flighted (four flights) mixing section for blowing agent dispersion. The screw was designed for high-pressure injection of blowing agent with minimized pressure drop between the first-stage metering section and point of blowing agent injection. The mixing section included 4 flights unbroken at the injection ports so that the orifices were wiped (opened and closed) by the flights. At a screw speed of 80 rpm each orifice was wiped by a flight at a frequency of 5.3 wipes per second. The mixing section and injection system allowed for very rapid establishment of a single-phase solution of blowing agent and polymeric material.

The injection system included air-actuated control valve to precisely meter a mass flow rate of blowing agent at rates from 0.091 to 5.4 kg/hr (0.2 to 12 lbs/hr) at pressures up to 380 bar (5500 psi).

The secondary extruder was equipped with a deep channel, three-flighted cooling screw with broken flights, which provided the ability to maintain a pressure profile of microcellular material precursor, between injection of blowing agent and entrance to the point of nucleation (the die, in this case) varying by no more than about 103 bar (1500 psi), and in most cases considerably less.

The system included instrumentation allowing measurement of pressure and temperature of the melt stream at least six locations throughout the tandem system between a location just prior to the blowing agent injection ports to the point of entry into the die to precisely monitor material conditions. Along the screw, melt temperature was measured with infrared equipment to avoid disruption of the melt stream.

Polypropylene pellets were gravity-fed from a hopper into the extrusion system. The grade used was a standard homopolymer resin, Montell's 6823, having a nominal melt flow index of 0.5 g/ 10 min. The polymeric material was essentially free of nucleating agent. Primary screw speed was 90 rpm, giving a total output of approximately 38 kg/hr (84 lbs/hr) of material. Secondary screw speed was 5 rpm. Barrel temperatures of the secondary extruder were set to maintain a melt temperature of 197°C (386°F) measured at the end of the secondary extruder. CO₂ blowing agent was injected at a rate of 1.81 kg/hr (4.0 lbs/hr) resulting in 4.8% blowing agent in the melt. A die adapter at the discharge of the secondary extruder was connected to a flat sheet T-type die having a die exit of 114 mm (4.5 inches) width and gap of 0.86mm (0.034 inch). A separate nucleator of constantly decreasing gap to an exit dimension of 0.38 mm (0.015 inch) was positioned within 13 mm (0.5 inches) of the die exit. The die had both melt and pressure indicators. Pressure profile between the injection ports and the inlet of the die was maintained 147 and 241 bar (between 2120 and 3490 psi).

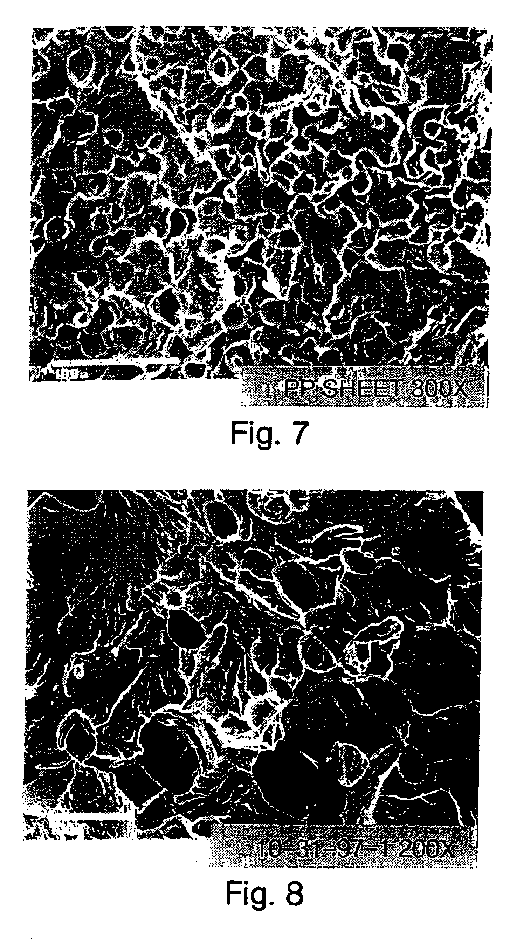

Fig. 7 is a photocopy of an SEM image of the cross section of the sheet showing a uniform dispersion of cells having an average diameter of about 25 microns. The sheet had an approximate thickness of 0.033 inch (0.83 mm). The density of the microcellular foam was approximately 0.63 g/cm³ (39 lbs/ft³).

### Example 5. Extrusion of Microcellular Polypropylene Sheet Without Filler (reference)

The same extrusion system, die, and polypropylene grade as described above in Example 4 was used for this example. The polymeric material was essentially free of nucleating agent. Primary screw speed was 75 rpm, giving a total output of approximately 27.2 kg/hr (60 lbs/hr) of material. Secondary screw speed was 20 rpm. Barrel temperatures of the secondary extruder were set to maintain a melt temperature of 181°C (358°. F) measured at the end of the secondary extruder. CO₂ blowing agent was injected at a rate of 1.13 kg/hr(2.5 lbs/hr) resulting in 4.2% blowing agent in the melt. Pressure profile between the injection ports and the inlet of the die was maintained between 150 and 252 bar (2180 psi and 3650 psi).

The sheet was taken up using a standard three roll stack, maintained at a temperature of 38°C (100°. F) using circulating oil. The take up speed was about 0.15 m/s (30 ft/min), to give a final sheet thickness of approximately 0.036 inch (0.93 mm). Fig. 8 is a photocopy of an SEM image of the cross section of the sheet, showing a non-uniform, generally non-microcellular structure. The average cell size was about 65 microns, with maximum size of 120 microns diameter. Material density was measured to be 0.79 g/cm³ (49.3 lbs/ft³).

The larger average cell size of the sheet produced in Example 5 compared to the sheet produced in Example 4 is due, in large part, to the lower blowing agent concentration used in Example 5 without the use of a nucleating agent.

### Example 6. Extrusion of Microcellular Polypropylene Sheet Having Talc Filler

Using the same polypropylene material and extrusion system as described in Example 4, polypropylene pellets were gravity-fed from a hopper into the extrusion system. Primary screw speed was 48 rpm, giving a total output of approximately 45.4 kg/hr (100 lbs/hr) of material. Secondary screw speed was 16 rpm. An auger type feeder was used to feed a talc/PP pellet concentrate (EP5140 A1 from Spartech Polycom) into the hopper. The screw speed on the auger was set to deliver 5.7 kg/hr (12.5 lb/hr) of talc concentrate into the hopper. This rate corresponded to 12.5% by weight based on the total material output. Since this concentrate was 40% by weight of talc, the resultant formulation contained about 5% talc. Barrel temperatures of the secondary extruder were set to maintain a melt temperature of 218°C (424°. F) measured at the end of the secondary extruder. CO₂ blowing agent was injected at a rate of 0.23 kg/hr (0.5 lbs/hr) resulting in 0.5% blowing agent in the melt. Pressure profile between the injection ports and the inlet of the die was maintained between 109 and 131 bar (1580 psi and 1900 psi). The die placed at the end of the secondary extruder was a t-type flat die having an opening of 279 mm (11 inches) in width by 0.8mm (0.030 inch) gap. The die lips were parallel, having a 13mm (0.5 inch) final land length. The pressure drop rate across the die lips was 0.07 GPa/s.

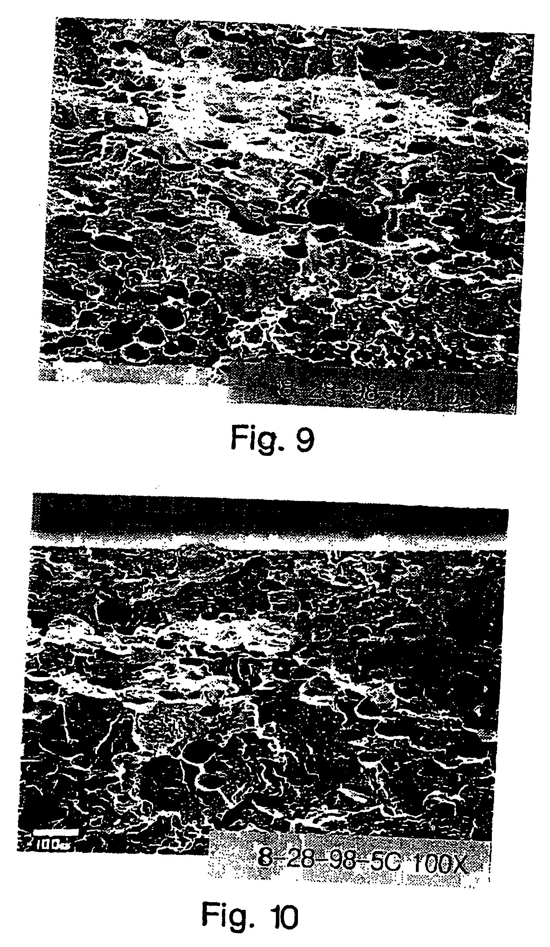

Using the same three roll stack maintained at 38°C (100°F) the sheet was taken up at 0.06m/s (11.4 ft/min), resulting in a sheet thickness of 0.038 inch (0.97 mm). Fig. 9 is a photocopy of an SEM image of the cross section of the sheet, showing fairly uniform, primarily closed cells of an average of about 50 microns diameter. The resultant sheet density was 0.71 g/cc (44.3 lbs/ft³).

Example 6 illustrates the production of microcellular polypropylene, including a mid-level range of talc as a nucleating agent, using a relatively low gas percentage and a relatively low pressure drop rate.

### Example 7. Extrusion of Microcellular Polypropylene Sheet Having Talc and Titanium Dioxide Fillers

The system identical to that described in Example 6 was used, except that a titanium dioxide/PP concentrate was hand mixed with the talc concentrate in a ratio of four parts talc concentrate to one part titanium dioxide (TiO₂) concentrate. Since the titanium dioxide concentrate also had about 40% by weight of TiO₂, this filler consisted of approximately 80% talc and 20% TiO₂. Primary screw speed was 48 rpm, giving a total output of approximately 45 kg/hr (100 lbs/hr) of material. The blend of concentrate pellets was fed by the auger feeder at a rate of 5.7 kg/hr (12.5 lb/hr) resulting in a final formulation containing 5% nucleating agent in the polypropylene matrix. Barrel temperatures of the secondary extruder were set to maintain a melt temperature of 218°C (424° F) measured at the end of the secondary extruder. CO₂ blowing agent was injected at a rate of 0.27 kg/hr (0.6 lbs/hr) resulting in 0.6% blowing agent in the melt. Pressure profile between the injection ports and the inlet of the die was maintained between 107 and 131 bar (1550 psi and 1900 psi). The die placed at the end of the secondary extruder was identical in all respects to that described in Example 6. The pressure drop rate across the die lips was about 0.07 GPa/s.

Using the same three roll stack, a take up speed of 0.06m/s (11.7 ft/min) resulted in a sheet thickness of 0.040 inch (1.0 mm) and had a density of 0.73 g/cc (45.6 lbs/ft³). Fig. 10 is a photocopy of an SEM image of the cross section of the sheet, showing fairly uniform, primarily closed cells of an average of about 40 microns diameter.

Example 7 illustrates the production of microcellular polypropylene, including talc and TiO₂ as nucleating agents.

### Example 8. Microcellular Polypropylene 5% Talc Filled Tubular Product

An NRM (Pawcatuck, CT) 2.5 inch 44/1 L/D long single extrusion line was equipped with an injection system for injection of CO₂ placed at a distance of approximately 25 diameters from the feed section. The injection system included 4 equally-spaced circumferentially, radially-positioned ports, each port including 417 orifices, each orifice of 0.51mm (0.02 inch) diameter, for a total of 1668 orifices.

The extruder was equipped with a two-stage screw including conventional first-stage feed, barrier flight transition, and metering sections, followed by a multi-flighted (six flights) mixing section for blowing agent dispersion. The screw was designed for high-pressure injection of blowing agent with minimized pressure drop between the first-stage metering section and point of blowing agent injection. The second stage of the screw included a mixing section having 6 flights unbroken at the injection ports so that the orifices were wiped (opened and closed) by the flights. At a screw speed of 80 rpm each orifice was wiped by a flight at a frequency of 8 wipes per second. The mixing section and injection system allowed for very rapid establishment of a single-phase solution of blowing agent and polymeric material. The injection system included an air-actuated control valve to precisely meter a mass flow rate of blowing agent at rates from 0.091 to 22.7 kg/hr (0.2 to 50 lbs/hr) at pressures up to 380 bar (5500 psi).

The second stage of the screw was also equipped with a deep channel, three-flighted cooling section with broken flights, which provided the ability to cool the polymer melt stream.

The system included, at the end of the extruder, a die adapter and a cylindrical annular die with a gap of 8.6mm (0.34 inch) inner diameter of 10mm (0.4 inch), and land length of 51mm (2 inches). The die adapter was equipped with taps for measurement of melt temperature and pressure just prior to entry into the die.

The system included instrumentation allowing measurement of pressure and temperature of the melt stream at least 7 locations throughout the system between a location just prior to the blowing agent injection ports to the point of entry into the die to precisely monitor material conditions. Along the screw, melt temperature was measured with infrared equipment to avoid disruption of the melt stream.

A standard homopolymer resin, Solvay's HB 1301, having a nominal melt flow index of 5g/10 min., was used as the base resin. Talc concentrate consisting of pellets having 40 percent by weight of talc dispersed in a homopolymer polypropylene matrix (Montell Astryn 65F4-4) were blended with the HB 1301 using a loss-in-weight type blending system to produce a mixture containing 5% by weight of talc (12.5% talc concentrate). This mixture was then gravity fed from a hopper into the extrusion system. Primary screw speed was 50 rpm , giving a total output of approximately 24.5 kg/hr (54 lbs/hr) of material. Barrel temperatures were set to maintain a melt temperature of 217°C (422°. F) measured at the end of the extruder. CO₂ blowing agent was injected at a rate of 0.14 kg/hr (0.3 lbs/hr) resulting in 0.55% blowing agent in the melt. A die adapter was attached to the discharge of the extruder, connecting to a cylindrical annular die having a gap of 0.011mm (0.025 inches) with an outer diameter of 4.6mm (0.18 inches) and a land length of 3.8 mm (0.15 inches) Pressure profile between the injection ports and the inlet of the die was maintained between 168 and 244 bar (2430 and 3540 psi). The pressure drop rate across the die was 11.2 GPa/s.

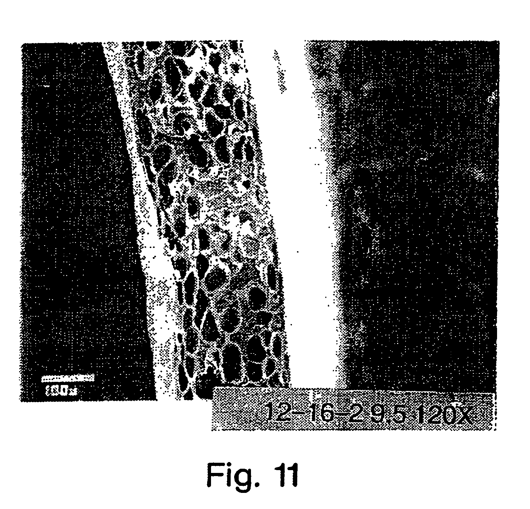

Fig. 11 is a photocopy of an SEM image of the cross section of the extrudate, showing generally spherical cells approximately 50 microns in diameter dispersed throughout the cross section of the tube wall. Wall thickness of the product was approximately 0.008 inch (0.21 mm). Product outer diameter was about 0.26 inch (6.60 mm). Material density was approximately 0.51 g/cm³ (32 lbs/ft³).

Example 8 illustrates the production of thin microcellular polypropylene material using a mid-level amount of talc as a nucleating agent, while utilizing a relatively low amount of blowing agent and a relatively high pressure drop rate.

### Example 9. Microcellular Polypropylene 3% Talc Filled Tubular Product

A resin formulation having the same base polypropylene resin grade as Example 8, but with 3% of talc (7.5% talc concentrate) was blended and gravity fed from a hopper into the extrusion system. Primary screw speed was 50 rpm, giving a total output of approximately 24.5 kg/hr (54 lbs/hr) of material. Barrel temperatures were set to maintain a melt temperature of 219°C (427°F) measured at the end of the extruder. CO₂ blowing agent was injected at a rate of 0.12 kg/hr (0.27 lbs/hr) resulting in 0.5% blowing agent in the melt. A die as described in Example 8 was attached to the discharge of the extruder. Pressure profile between the injection ports and the inlet of the die was maintained between 183 and 269 bar (2650 and 3900 psi). The pressure drop rate across the die was 12.4 GPa/s.

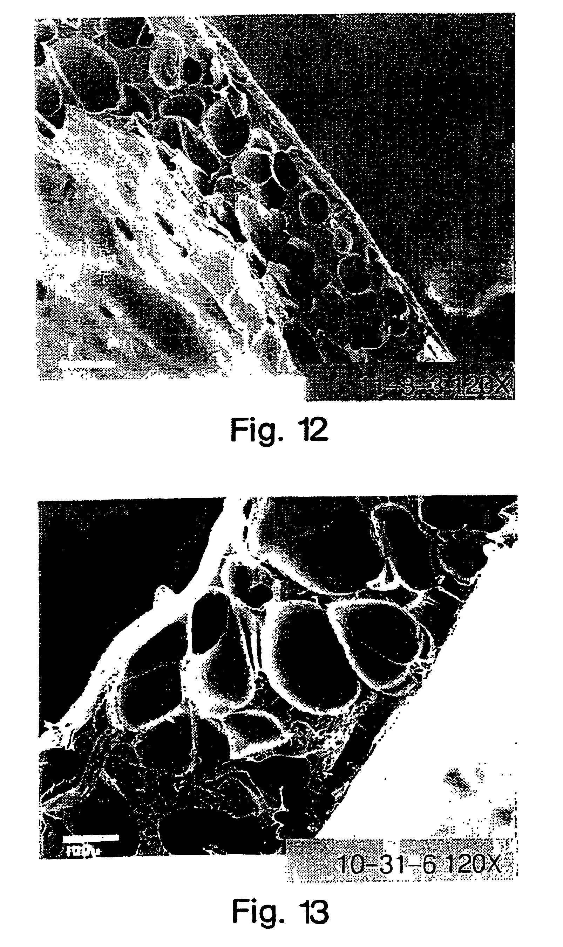

Fig. 12 is a photocopy of an SEM image of the cross section of the extrudate, showing generally spherical cells approximately 60 microns in diameter dispersed throughout the cross section of the tube wall. Wall thickness of the product was approximately 0.010 inch (0.25 mm). Product outer diameter was about 0.26 inch (6.60 mm). Material density was approximately 0.52 g/cm³ (32.4 lbs/ft³).

The material produced in Example 9 has a larger average cell size compared to the material produced in Example 5 due to the presence of less nucleating agent in Example 6.

### Example 10. Non-Microcellular Polypropylene 1% Talc Filled Tubular Product (reference)

A resin formulation having the same base polypropylene resin grade as Example 8, but with 1% of talc (2.5% talc concentrate) was blended and gravity fed from a hopper into the extrusion system. Primary screw speed was 50 rpm, giving a total output of approximately 24.5 kg/hr (54 lbs/hr) of material. Barrel temperatures were set to maintain a melt temperature of 220°C (428°F) measured at the end of the extruder. CO₂ blowing agent was injected at a rate of 0.22 kg/hr (0.48 lbs/hr) resulting in 0.9% blowing agent in the melt. A die as described in Example 8 was attached to the discharge of the extruder. Pressure profile between the injection ports and the inlet of the die was maintained between 180 and 268 bar (2600 and 3880 psi). The pressure drop rate across the die was about 12.4 GPa/s.

Fig. 13 is a photocopy of an SEM image of the cross section of the extrudate, showing generally spherical cells approximately 150 microns in diameter dispersed throughout the cross section of the tube wall. Wall thickness of the product was approximately 0.018 inch (0.46 mm). Product outer diameter was about 0.26 inch (6.60 mm). Material density was approximately 0.53 g/cm³ (33.1 lbs/ft³).

The material produced in Example 10 with less than a mid-level range of nucleating agent (1% talc) is non-microcellular.

### Examples 11-14 High-Density Polyethylene Microcellular Foam

A tandem extrusion line including a 2 1/2 mm 32:1 L/D single screw primary extruder (Akron Extruders, Canal Fulton, OH) and a 3 36:1 L/D single screw secondary extruder (Akron Extruders, Canal Fulton, OH was arranged in a right angle configuration. A volumetric feeder capable of suppling up to 14 kg/hr (30 lb/hr) was mounted in the feed throat of the primary extruder such that compounded talc additive pellets could be metered into the primary extruder. An injection system for the injection of CO₂ into the secondary was placed at approximately 8 diameters from the inlet to the secondary. The injection system included 4 equally spaced circumferential, radially-positioned ports, each port including 176 orifices, each orifice of 0.51mm (0.02 inch) diameter, for a total of 704 orifices. The injection system included an air actuated control valve to precisely meter a mass flow rate of blowing agent at rates from 0.091 to 5.4 kg/hr (0.2 to 12 lbs/hr) at pressures up to 380 bar (5500 psi.)

The screw of the primary extruder was specially designed screw to provide feeding, melting and mixing of the polymer/talc concentrate followed by a mixing section for the dispersion of blowing agent in the polymer. The outlet of this primary extruder was connected to the inlet of the secondary extruder using a transfer pipe of about 0.61m (24 inches) in length.

The secondary extruder was equipped with specially designed deep channel, multi-flighted screw design to cool the polymer and maintain the pressure profile of the

microcellular material precursor, between injection of blowing agent and entrance to a gear pump (LCI Corporation, Charlotte, NC) attached to the exit of the secondary. The gear pump was equipped with an integral jacket for heating/cooling and sized to operate at a maximum output of 113 kg/hr (250 lb/hr) with a rated maximum discharge pressure of 690 bar (10,000 psi.)

The system was equipped, at exit from the gear pump, with a die adapter and a vertically mounted blow molding die (Magic Company, Monza, Italy). The die adapter was equipped with taps for measurement of melt temperature and pressure just prior to entry into the die. The blow molding head included a conventional spider type flow distribution channel and a die adjustment system that allowed movement of the die relative to the fixed position tip providing a variety of exit gaps depending on the chosen tooling.

The above described system was used to produce microcellular HDPE foam samples including a mid-level range of nucleating agent as illustrated in Examples 11-14. The processing conditions and the resulting product characteristics for Examples 11-14 are summarized as follows:

| | Example 11 | Example 12 | Example 13 | Example 14 |
|---|---|---|---|---|
| Talc % | 2.5 | 6.5 | 2.5 | 5.0 |
| Gas Type | CO₂ | CO₂ | N₂ | N₂ |
| Gas % | 1.3 | 1.3 | 0.33 | 0.33 |
| Melt Temp °C(°F) | 155(311) | 155(311) | 159(318) | 159(318) |
| Output kg/hr (lb/hr) | 49(120) | 49(120) | 103(217) | 103(218) |
| dP/dt (GPa/s) | 3.9 | 3.9 | 3.5 | 3.5 |
| Cell Size (µm) | 53 | 29 | 50 | 34 |

### Example 15: Microcellular Extrusion System

A tandem extrusion line as described in Example 1 was used with the exception that the secondary extruder was equipped with a deep channel, multi-flighted screw design to cool the polymer and maintain the pressure profile of the microcellular material precursor, between injection of blowing agent and entrance to a die adapter and a vertically mounted blow molding die (Magic Company, Monza, Italy). The die adapter was equipped with taps for measurement of melt temperature and pressure just prior to entry into the die. The blow molding head included a conventional spider type flow distribution channel and a die adjustment system that allowed movement of the die relative to the fixed position tip providing a variety of exit gaps depending on the chosen tooling.

### Example 16: Comparative: Stripped Parison formation

High density polyethylene (Equistar LR 5403) pellets were introduced into the main hopper of the extrusion line described in example 15. The tooling attached to the blow molding head included a die with a 31.2 mm (1.227 inch) exit diameter and a tip of 30mm (1.181 inch) exit diameter and 2° taper angle. This tooling configuration provided an exit gap of 0.6mm (0.023 inches) and an included taper angle of 2°.

The extruder was adjusted to provide an output of approximately 64 kg/hr (140 lb/hr) at speeds of approximately 58 rpm on the primary and 25 rpm on the secondary. Secondary barrel temperatures were set to maintain a melt temperature of approximately 152°C (305°F) at entrance to the die. The volumetric feeder was turned off and no compounded talc was added. CO₂ blowing agent was injected at a nominal rate of 2.2 kg/hr (4.8 lb/hr) resulting in a 3.4% by polymer weight blowing agent in the material.

At the above conditions, the time to die exit from the point of nucleation of the polymer was approximately 0.060 seconds. These conditions produced stripping of the product.

### Example 17: Miscellaneous Extrusion System

A system as in Example 15 was employed except that a gear pump (LCI Corporation, Charlotte, NC) was installed between the exit of the secondary and entrance to the head. The gear pump was equipped with an integral jacket for heating/cooling and sized to operate at a maximum output of 113 kg/hr (250 lb/hr) with a rated maximum discharge pressure of 690 bar (10,000 psi)

### Example 18: Parison formation

High density polyethylene (Equistar LR 5403) pellets were introduced into the main hopper of the extrusion line described in example 17. The tooling attached to the blow molding head included a die with a 17.4mm (0.685 inch) exit diameter and a tip of 15.8mm (0.623 inch) exit diameter and 2° taper angle. This tooling configuration provided an exit gap of 0.79 mm (0.031 inches) and an included taper angle of 4°.

The extruder and gear pump rpm were adjusted to provide an output of approximately 98 kg/hr (216 lb/hr) at speeds of approximately 78 rpm on the primary, 32 rpm on the secondary and 50 rpm on the gear pump. Secondary barrel temperatures were set to maintain a melt temperature of approximately 157°C (315°F) at entrance to the die. The additive feeder was set to provide an output of approximately 5 kg/hr (11 lb/hr) resulting in a 2.7% by polymer weight talc in the material. CO₂ blowing agent was injected at a nominal rate of 1 kg/hr (2.2 lb/hr) resulting in a 1.0% by polymer weight blowing agent in the material.

At the above conditions, the time to die exit from the point of nucleation of the polymer was approximately 0.002 seconds. These conditions produced good foam with an average cell size of approximately 70 microns without stripping.

### Example 19: Parison formation

High density polyethylene (Equistar LR 5403) pellets were introduced into the main hopper of the extrusion line described in example 17. The tooling attached to the blow molding head included a die with a 16.8mm (0.661 inch) exit diameter and of 4° taper angle and a tip of 16.1mm (0.633 exit diameter and 2° taper angle. This tooling configuration provided an exit gap of 0.36mm (0.014 inches) and an included taper angle of 6°.

The extruder and gear pump rpm were adjusted to provide an output of approximately 96 kg/hr (212 lb/hr) at speeds of approximately 62 rpm on the primary, 37 rpm on the secondary and 50 rpm on the gear pump. Secondary barrel temperatures were set to maintain a melt temperature of approximately 157°C (315°F) at entrance to the die. The additive feeder was set to provide an output of approximately 5 kg/hr (11 lb/hr) resulting in a 2.7% by polymer weight talc in the material. CO₂ blowing agent was injected at a nominal rate of 1.45 kg/hr (3.2 lb/hr) resulting in a 1.5% by polymer weight blowing agent in the material.

At the above conditions, the time to die exit from the point of nucleation of the polymer was approximately 0.003 seconds. These conditions produced good foam with an average cell size of approximately 19 microns without stripping.

Those skilled in the art would readily appreciate that all parameters listed herein are meant to be exemplary and that actual parameters will depend upon the specific application for which the methods and apparatus of the present invention are used. It is, therefore, to be understood that the foregoing embodiments are presented by way of example only and that, within the scope of the appended claims and equivalents thereto, the invention may be practiced otherwise than as specifically described.

## Claims

1. A method comprising:
providing a polymeric microcellular foam parison by extrusion from a single phase solution of supercritical blowing agent in an amount of less than 3% weight blowing agent based on the weight of the polymeric steam and the blowing agent, and polymeric material and
blow molding the parison to form a blow molded foam, microcellular polymeric article comprising a polymeric semi-crystalline material and a nucleating agent in an amount of from 2,5% to 7% by weight, by weight of the polymeric material and having an average cell size of less than 100 µm.

2. A method as claimed in claim 1, wherein the foam parison is of void fraction of at least 10%.

3. A method as claimed in claim 1 or 2, wherein the parison has a problem thickness of less than 2.54 mm (0.100 inch).

4. A method as claimed in claim 1, wherein the blowing agent comprises carbon dioxide.

5. A method as claimed in claim 1, wherein the blowing agent comprises nitrogen.

6. A method as claimed in any of claims 1 to 5 the subjecting step involving applying pressure of at least 1,5 bar internal of the parison.

7. A method as claimed in claim 6 involving applying pressure of at least 3 bar internal of the parison.

8. A method as claimed in claim 7, involving applying pressure of at least 5 bar internal of the parison.

9. A method as claimed in claim 8, involving applying pressure of at least 10 bar internal of the parison.

10. A method as claimed in any of claims 1 to 9 comprising:
providing an extruded polymeric foam parison having a first portion and second portion spaced from the first portion in the parison machine direction the first portion and the second portion differing in thickness by a factor of at least 1.1 and
subjecting the parison to blow molding conditions.

11. A method as claimed in claim 10 tha first portion and the second portion differing in thickness by a factor of at least 1.3.

12. A method at claimed in any of claims 1 to 11 comprising:
providing an extruded parison of polymeric material of melt flow no more than 0.2 g/10 min: and
subjecting the parison to flow molding conditions.

13. A method as in any of claims 1 to 12, wherein the foam parison, is of void fraction of at least 20%.

14. A method as claimed in claim 13, wherein the foam parison is of void fraction of at least 30%.

15. A method as claimed in claim 14, wherein the foam parison is of void fraction of at least 40%.

## Patentansprüche

1. Verfahren, umfassend:
Bereitstellen eines mikrozellularen Polymer-Schaumextrudats durch Extrusion von einer einphasigen Lösung eines überkritischen Blasmittels einer Menge von weniger als 3 Gew.-% Blasmittel, basierend auf dem Gewicht des Polymerstroms und des Blasmittels, und Polymermaterials und
Blasformen des Extrudats, um einen blasgeformten Schaum-, Mikrozellular-Polymergegenstand mit einem semi-kristallinen Polymermaterial und einem Zellenbildner einer Menge von zwischen 2,5 Gew.-% und 7 Gew.-% des Gewichts des Polymermaterials und mit einer durchschnittlichen Zellgröße von weniger als 100 µm auszuformen.

2. Verfahren wie in Anspruch 1 beansprucht, wobei das Schaumextrudat eine Hohlraumfraktion von weniger als 10 % besitzt.

3. Verfahren wie in Anspruch 1 oder 2 beansprucht, wobei das Extrudat eine vorgeblasene Dicke von weniger als 2,54 mm (0,100 Inch) aufweist.

4. Verfahren wie in Anspruch 1 beansprucht, wobei das Blasmittel Kohlendioxid umfasst.

5. Verfahren wie in Anspruch 1 beansprucht, wobei das Blasmittel Stickstoff umfasst.

6. Verfahren wie in einem der Ansprüche 1 bis 5 beansprucht, bei dem der Behandlungsschritt das Aufbringen von Druck von zumindest 1,5 bar innerhalb des Extrudats beinhaltet.

7. Verfahren wie in Anspruch 6 beansprucht, beinhaltend das Aufbringen von Druck von zumindest 3 bar innerhalb des Extrudats.

8. Verfahren wie in Anspruch 7 beansprucht, beinhaltend das Aufbringen von Druck von zumindest 5 bar innerhalb des Extrudats.

9. Verfahren wie in Anspruch 8 beansprucht, beinhaltend das Aufbringen von Druck von zumindest 10 bar innerhalb des Extrudats.

10. Verfahren wie in einem der Ansprüche 1 bis 9 beansprucht, umfassend:
Bereitstellen eines extrudierten Polymer-Schaumextrudats mit einem ersten Abschnitt und einem von dem ersten Abschnitt in der Extrudat-Maschinenrichtung beabstandeten zweiten Abschnitt, wobei sich der erste Abschnitt und der zweite Abschnitt in der Dicke um einen Faktor von zumindest 1,1 unterscheiden; und
Aufbringen von Blasform-Bedingungen auf das Extrudat.

11. Verfahren wie in Anspruch 10 beansprucht, wobei sich der erste Abschnitt und der zweite Abschnitt in der Dicke um einen Faktor von zumindest 1,3 unterscheiden.

12. Verfahren wie in einem der Ansprüche 1 bis 11 beansprucht, umfassend:
Bereitstellen eines extrudierten Extrudats aus Polymermaterial mit einem Schmelzfluss von nicht mehr als 0,2 g/10 min; und
Aufbringen von Blasform-Bedingungen auf das Extrudat.

13. Verfahren wie in einem der Ansprüche 1 bis 12, wobei das Schaumextrudat eine Hohlraumfraktion von zumindest 20 % besitzt.

14. Verfahren wie in Anspruch 13 beansprucht, wobei das Schaumextrudat eine Hohlraumfraktion von zumindest 30 % besitzt.

15. Verfahren wie in Anspruch 14 beansprucht, wobei das Schaumextrudat eine Höhlraumfraktion von zumindest 40 % besitzt.

## Revendications

1. Procédé comprenant :
la fourniture d'une paraison de mousse micro-cellulaire polymérique par extrusion à partir d'une solution à phase unique d'un agent de soufflage supercritique dans une quantité de moins que 3% en poids d'agent de soufflage sur la base du poids du flux polymérique et de l'agent de soufflage, et d'un matériau polymérique et
le moulage par soufflage de la paraison pour former un article polymérique micro-cellulaire de mousse moulé par soufflage comprenant un matériau semi-cristallin polymérique et un agent de nucléation dans une quantité de 2,5% à 7% en poids, par rapport au poids du matériau polymérique et ayant une taille moyenne de cellules de moins que 100 µm.

2. Procédé selon la revendication 1, dans lequel la paraison de mousse a une fraction de vide d'au moins 10%.

3. Procédé selon la revendication 1 ou 2, dans lequel la paraison a une épaisseur avant soufflage de moins que 2,54 mm (0,100 pouce).

4. Procédé selon la revendication 1, dans lequel l'agent de soufflage comprend du dioxyde de carbone.

5. Procédé selon la revendication 1, dans lequel l'agent de soufflage comprend de l'azote.

6. Procédé selon l'une quelconque des revendications 1 à 5, l'étape de soumission impliquant l'application d'une pression d'au moins 1,5 bar de façon interne à la paraison.

7. Procédé selon la revendication 6, impliquant l'application d'une pression d'au moins 3 bars de façon interne à la paraison.

8. Procédé selon la revendication 7, impliquant l'application d'une pression d'au moins 5 bars de façon interne à la paraison.

9. Procédé selon la revendication 8, impliquant l'application d'une pression d'au moins 10 bars de façon interne à la paraison.

10. Procédé selon l'une quelconque des revendications 1 à 9, comprenant :
la fourniture d'une paraison de mousse polymérique extrudée ayant une première partie et une deuxième partie espacée de la première partie dans le sens machine de la paraison, la première partie et la deuxième partie différant en épaisseur d'un facteur d'au moins 1,1 ; et
la soumission de la paraison à des conditions de moulage par soufflage.

11. Procédé selon la revendication 10, la première partie et la deuxième partie différant en épaisseur d'un facteur d'au moins 1,3.

12. Procédé selon l'une quelconque des revendications 1 à 11, comprenant :
la fourniture d'une paraison extrudée d'un matériau polymérique ayant un indice de fluidité de pas plus que 0,2 g/10 min ; et
la soumission de la paraison à des conditions de moulage par soufflage.

13. Procédé selon l'une quelconque des revendications 1 à 12, dans lequel la paraison de mousse a une fraction de vide d'au moins 20%.

14. Procédé selon la revendication 13, dans lequel la paraison de mousse a une fraction de vide d'au moins 30%.

15. Procédé selon la revendication 14, dans lequel la paraison de mousse a une fraction de vide d'au moins 40%.
